# EUROPÄISCHE PATENTSCHRIFT

(11) **EP 3 961 883 B1**
(45) Veröffentlichungstag und Bekanntmachung des Hinweises auf die Patenterteilung: **10.12.2025**
(21) Anmeldenummer: 21192245.5
(22) Anmeldetag: 19.08.2021
(51) Int. Cl.: H02K 41/03, H02K 3/24, H02K 11/25, H02K 3/47, H02K 9/04

(54) **LINEARMOTOR-STATORANORDNUNG MIT EXTERNER KONVEKTIVER ZWANGSKÜHLUNG**
LINEAR MOTOR STATOR ASSEMBLY WITH EXTERNAL CONVECTIVE FORCED COOLING
AGENCEMENT DE STATOR DE MOTEUR LINÉAIRE À REFROIDISSEMENT FORCÉ CONVECTIF EXTERNE

(30) Priorität: 25.08.2020 DE 102020122239
(43) Veröffentlichungstag der Anmeldung: 02.03.2022
(73) Patentinhaber: Intrasys GmbH Innovative Transportsysteme, 80339 München (DE)
(72) Erfinder: GRIMM, Arnulf, 86977 Burggen (DE); KRAUS, Dieter, 81371 München (DE); HOLLMER, Tobias, 80796 München (DE)
(74) Vertreter: Ruttensperger Lachnit Trossin Gomoll

(56) Entgegenhaltungen:
- DE-A1- 10 019 230
- JP-A- 2000 245 131
- JP-A- 2004 215 419
- JP-A- H01 152 949
- JP-A- H02 237 459
- JP-A- H08 168 233
- JP-U- H0 525 980
- KR-A- 20000 075 005
- TW-A- 201 415 769
- US-A1- 2014 103 748

## Beschreibung

Die vorliegende Erfindung betrifft eine Linearmotor-Statoranordnung gemäß dem Oberbegriff des Anspruchs 1.

Eine gattungsgemäße Linearmotor-Statoranordnung ist jeweils aus der JP H05-025980 U und der JP H01-152949 A bekannt.

Derartige Linearmotor-Statoranordnungen werden beispielsweise zur Beschleunigung und auch Verzögerung von Transportvorrichtungen, insbesondere Personen-Transportvorrichtungen verwendet. Ein Einsatzgebiet mit besonders hohen technischen Anforderungen liegt dabei im Antrieb und in der Abbremsung von Personenträgern in Fahrgeschäften der Volksbelustigung, wie etwa in Achterbahnen, Wasserrutschen und dergleichen.

Bei der für Fahrgeschäfte in wiederkehrenden Intervallen erforderlichen Beschleunigung und Verzögerung eines Fahrgastträgers werden Statoranordnungen thermisch stark belastet. Zur Erhöhung der Wirtschaftlichkeit derartiger Anlagen ist man bemüht, die Betriebsintervalle von Linearmotoren zu verkürzen. Damit werden Abkühlphasen zwischen Betriebsphasen kürzer und die thermische Belastung steigt. Die im Betrieb der Statoranordnungen in den Statoranordnungen erzeugte Wärme muss abgeführt werden, um eine Überhitzung einer Statoranordnung zu verhindern.

Aus der WO 2016/202798 A1 ist eine Linearmotor-Statoranordnung mit einem flächigen Kühlgehäuse bekannt, welches von einer Kühlflüssigkeit durchströmbar ist. Das Kühlgehäuse weist in jeder Richtung orthogonal zu Wicklungsachsen, um welche die jeweiligen Spulen der Statoranordnung gewickelt sind, in etwa die Abmessungen eines die Spulenanordnung aufnehmenden Spulengehäuses auf. Die Spulenanordnung berührt das Kühlgehäuse, sodass in der Spulenanordnung aufgrund von ohm'schem Widerstand in den Spulen entstehende Wärme konduktiv an das Kühl gehäuse übertragen und von dort konvektiv durch die Kühlflüssigkeit abtransportiert werden kann.

Eine stete Anforderung an derartige Wicklungsanordnungen ist, dass ihre in der Regel längs der Spulen-Wicklungsachsen verlaufende Dickenabmessung möglichst gering ist. Gemäß der aus der WO 2016/202798 A1 bekannten Lösung wird die Linearmotor-Statoranordnung, verglichen mit einer ungekühlten Statoranordnung, um die Dicke des Kühlgehäuses verbreitert. Dadurch wird die Abmessung des Luftspalts zwischen der Spulenanordnung und einem relativ zur Statoranordnung bewegten läuferseitigen Wechselwirkungsbauteil unerwünschterweise vergrößert.

Das Wechselwirkungsbauteil umfasst, und das gilt auch für die vorliegende Erfindung, im Falle eines linearen Synchronmotors eine Magnetanordnung mit längs der Folgeachse aufeinanderfolgend mit alternierender Polausrichtung angeordneten Magneten, insbesondere Permanentmagneten, oder im Falle eines linearen Asynchronmotors ein Induktionsbauteil, in welches durch das Magnetfeld der Statoranordnung Wirbelströme induziert werden, die selbst wiederum ein Magnetfeld bewirken, das mit dem Magnetfeld der Statoranordnung zur Erzielung einer Kraftwirkung längs der Folgeachse wechselwirkt. Die Statoranordnung und das Wechselwirkungsbauteil bilden gemeinsam einen Linearmotor.

Darüber hinaus sind Statoranordnungen bekannt, welche ein Statorgehäuse umfassen, das zum Wärmeabtransport unmittelbar von einem Kühlfluid durchströmbar ist. Diese Statoranordnungen sind, verglichen mit einer ungekühlten Spulenanordnung, in ihrem Aufbau komplizierter, da im Statorgehäuse, zusätzlich zu Kavitäten zur Aufnahme der Spulenanordnung und ihrer elektrischen Anschlüsse, Kühlkanäle und deren Anschlüsse zur Durchströmung mit einem Kühlfluid ausgebildet werden müssen.

Es ist daher Aufgabe der vorliegenden Erfindung, eine Linearmotor-Statoranordnung anzugeben, welche einfach und sicher selbst bei leistungsintensivem Betrieb vor einer Überhitzung bewahrt werden kann.

Diese Aufgabe wird durch eine Linearmotor-Statoranordnung mit allen Merkmalen des Anspruchs 1 gelöst. Eine solche Linearmotor-Statoranordnung umfasst zusätzlich eine Konvektionskühlvorrichtung zur konvektiven Zwangskühlung. Die Konvektionskühlvorrichtung weist eine sich längs einer Leitungsbahn erstreckende Fluidleitung auf, von welcher wenigstens ein Abschnitt mit Abstand von der Spulenanordnung neben der Spulenanordnung verläuft. Der neben der Spulenanordnung verlaufende Abschnitt der Fluidleitung weist als Kühlabschnitt in einer Fluidleitungswand eine Vielzahl von Auslassöffnungen auf, welche zu der Spulenanordnung hinweisen und mit Abstand voneinander längs der Leitungsbahn hintereinander angeordnet sind. Die Statoranordnung, insbesondere die Konvektionskühlvorrichtung, umfasst weiter eine Fördervorrichtung, welche mit der Fluidleitung verbunden und zur Förderung eines Fluids in der Fluidleitung sowie durch die Auslassöffnungen hindurch zur Spulenanordnung hin ausgebildet ist. Im Kühlabschnitt sind längs der Leitungsbahn Auslassöffnungen vorgesehen. Die Auslassöffnungen weisen betragsmäßig unterschiedliche vom Fluid durchströmbare Auslassöffnungsquerschnitte auf oder/und die Auslassöffnungen sind in unterschiedlichen sich längs der Leitungsbahn erstreckenden Abstandsbereichen des Kühlabschnitts mit betragsmäßig unterschiedlichen Abständen zwischen Paaren von längs der Leitungsbahn unmittelbar hintereinander angeordneten Auslassöffnungen angeordnet.

Bevorzugt ist die Spulenanordnung vor äußeren Einflüssen geschützt in einem Spulengehäuse aufgenommen. Das Spulengehäuse kann ein Schalengehäuse sein und kann als solches aus wenigstens zwei Schalenteilen zusammengebaut sein. Das Spulengehäuse ist in der Regel ein ungekrümmtes flächiges Gebilde, deren Dickenabmessung wesentlich kleiner als deren zur Dickenabmessung orthogonale Höhenabmessung ist. Die Höhenabmessung ist wiederum kleiner als die sowohl zur Dickenabmessung als auch zur Höhenabmessung orthogonale Längsabmessung. Die Wicklungsachsen der Spulen der Spulenanordnung verlaufen üblicherweise in Dickenrichtung des Spulengehäuses. Die Längsabmessung ist in der Regel parallel zur Folgeachse.

Die Fluidleitung ist außerhalb des Spulengehäuses angeordnet, sodass das Spulengehäuse mit geringer Dickenabmessung orthogonal zur Folgeachse ausgebildet sein kann. Die Fluidleitung kann einen Schlauch oder/und ein Rohr umfassen. Aus Gründen guter Formstabilität ist bevorzugt der Kühlabschnitt durch ein Rohr gebildet. Eine fluidleitende Verbindung zwischen der Fördervorrichtung, beispielsweise ein Gebläse im Falle eines Gases, insbesondere Luft, als konvektiv kühlendes Fluid, oder eine Pumpe im Falle einer Flüssigkeit als konvektiv kühlendes Fluid, und dem Kühlabschnitt kann zu Erleichterung der Montage durch einen flexiblen Schlauch gebildet sein, welcher eine Verbindung von Fördervorrichtung und Kühlabschnitt selbst dann problemlos gestattet, wenn ein Anordnungsort eines Fluidauslasses der Fördervorrichtung oder/und eines Fluideinlasses des Kühlabschnitts verändert wird.

Bevorzugt ist das Fluid, welches durch die Auslassöffnungen des Kühlabschnitts zur Spulenanordnung, insbesondere zu einer äußeren Seitenfläche des Spulengehäuses, hin ausströmt, Luft, die, von der Fördervorrichtung aus der Umgebung angesaugt, in unbegrenzter Menge zur Verfügung steht.

Es soll im Gegensatz zum vorstehend Gesagten nicht ausgeschlossen sein, dass die Fluidleitung eine einstückige Fluidleitung von der Fördervorrichtung bis zum Ende des Kühlabschnitts ist. Vorzugsweise ist die Fluidleitung zur Erzielung eines möglichst hohen Fluiddurchsatzes an den Auslassöffnungen am Ende des Kühlabschnitts geschlossen. Sie ist also bevorzugt keine Zirkulationsleitung, welche in Strömungsrichtung des Fluids längs der Leitungsbahn stromabwärts des Kühlabschnitts wieder zur Fördervorrichtung zurückkehrt.

Der Kühlabschnitt, insbesondere in seiner bevorzugten Ausgestaltung als formstabiles Fluidleitungsrohr, verläuft mit seinem bevorzugt geradlinigen Leitungsbahnabschnitt parallel zur Folgeachse und damit parallel zur Längsrichtung der Spulenanordnung.

Wenngleich es nicht ausgeschlossen sein soll, dass die Mehrzahl von Auslassöffnungen im Kühlabschnitt längs der Leitungsbahn aufeinanderfolgend in unterschiedlichen Umfangsbereichen um die Leitungsbahn angeordnet sein können, ist eine Anordnung längs einer Parallelen zur Leitungsbahn, welche bevorzugt eine parallele zur Folgeachse ist, bevorzugt. Die Mittelpunkte der Auslassöffnungen liegen gemäß dieser bevorzugten Ausführungsform längs einer Parallelen der Leitungsbahn. Besonders bevorzugt liegen Mittellinien, welche jeweils eine Auslassöffnung längs ihrer Auslassrichtung durchsetzen, in einer gemeinsamen Ebene. Schließlich soll von jeder Auslassöffnung ein Anströmbereich der Spulenanordnung, insbesondere des Spulengehäuses, mit Fluid konvektiv gekühlt werden. Dabei sollen bevorzugt die Anströmbereiche an der Spulenanordnung, insbesondere am Spulengehäuse, welche von den einzelnen Auslassöffnungen mit Fluid angeströmt werden, in etwa die gleiche Gestalt und bezüglich der Folgeachse als Längsabmessung sowie bezüglich der sowohl zur Folgeachse als auch zur Dickenrichtung orthogonalen Höhenrichtung in etwa die gleiche Lage relativ zur Spulenanordnung haben.

In einer Fluidleitung, welche längs ihrer Leitungsbahn von Fluid durchströmt wird und quer, insbesondere orthogonal, zur Leitungsbahn intermittierend eine Wand der Fluidleitung zur Außenumgebung hin durchsetzende Auslassöffnungen aufweist, stellen sich während einer Durchströmung mit dem Fluid komplizierte Strömungs- und Druckverhältnisse ein. Diese Strömungs- und Druckverhältnisse ändern sich längs der Leitungsbahn unter anderem aufgrund von durch die Auslassöffnungen aus der Fluidleitung austretendem Fluid.

Durch eine Anordnung von Auslassöffnungen mit unterschiedlich großen Auslassöffnungsquerschnitten längs der Leitungsbahn kann trotz der längs der Leitungsbahn veränderlichen Strömungs- und Druckverhältnisse im Kühlabschnitt eine durch aus den Auslassöffnungen austretendes Fluid bewirkte Kühlwirkung längs der Leitungsbahn vereinheitlicht bzw. vergleichmäßigt werden.

Gleiches gilt für unterschiedliche Abstände zwischen aufeinander folgenden Auslassöffnungen. Durch Wahl größerer Abstände zwischen Auslassöffnungen, durch welche hindurch aufgrund der längs der Leitungsbahn veränderlichen Strömungs- und Druckverhältnisse im Kühlabschnitt pro Zeiteinheit mehr Fluid austritt als durch andere Auslassöffnungen, und umgekehrt, kann ebenfalls die durch aus den Auslassöffnungen austretendes Fluid bewirkte Kühlwirkung längs der Leitungsbahn vereinheitlicht bzw. vergleichmäßigt werden.

Dabei handelt es sich um ein komplexes vernetztes Optimierungsproblem, da die Veränderung eines Auslassöffnungsquerschnitts oder eines Abstandes an einem Ort längs der Leitungsbahn, die Strömungsverhältnisse von Fluid beim Austritt durch eine Auslassöffnung an einem anderen Ort längs der Leitungsbahn verändert, ohne dass die letztgenannte Auslassöffnung oder ihr Ort der Anordnung verändert würde.

Nachfolgend wird zunächst der Aspekt der unterschiedlichen Auslassöffnungsquerschnitte und anschließend der Aspekt der unterschiedlichen Abstände diskutiert und weitergebildet. Die dabei verwendeten Begriffe "Öffnungsbereich" und "Abstandsbereich" bezeichnen jeweils einen sich längs der Leitungsbahn erstreckenden Bereich des Kühlabschnitts. Die Benennung als Öffnungsbereich und als Abstandsbereich dient lediglich der Unterscheidung des Bezugs einmal zu den Auslassöffnungsquerschnitten und ein weiteres Mal zu den Abständen zwischen Auslassöffnungen.

Grundsätzlich gilt, dass der Kühlabschnitt während eines Betriebs der Fördervorrichtung längs der Leitungsbahn in einer Strömungsrichtung von Fluid durchströmt ist. Da die Leitungsbahn als virtuelle Leitungsbahn die Fluidleitung zentral durchsetzend gedacht ist, ist die Strömungsrichtung lokal an jedem Punkt der Förderleitung in der Regel bei gekrümmter Leitungsbahn tangential zur Leitungsbahn und bei geradliniger Leitungsbahn kollinear mit dieser.

Der Betrieb der Fördervorrichtung kann kontinuierlich erfolgen oder kann diskontinuierlich bedarfsweise erfolgen. Die Statoranordnung kann eine Steuervorrichtung aufweisen, welche dazu ausgebildet ist, den Betrieb der Fördervorrichtung zu steuern. An der Spulenanordnung kann wenigstens ein Temperatursensor angeordnet sein, welcher eine Temperatur der Spulenanordnung erfasst bzw. eine Temperatur im Inneren des Spulengehäuses erfasst. Der wenigstens eine Temperatursensor kann signalübertragungsmäßig mit der Steuervorrichtung verbunden sein. Die Steuervorrichtung kann dazu ausgebildet sein, die Fördervorrichtung nach Maßgabe von Signalen des wenigstens einen Temperatursensors zu betreiben.

Für eine längs der Leitungsbahn möglichst gleichmäßige Kühlrate bei gleichzeitig ausreichender Kühlwirkung hat es sich als vorteilhaft erwiesen, wenn in einem weiter stromabwärts gelegenen Öffnungsbereich des Kühlabschnitts Auslassöffnungen mit kleineren Auslassöffnungsquerschnitten vorgesehen sind als in einem weiter stromaufwärts gelegenen Öffnungsbereich. Diese Anordnung ist insofern außergewöhnlich, als dass man aufgrund der mit der Strömungslänge in der Fluidleitung linear ansteigenden reibungsbedingten Druckverluste erwarten würde, dass ausgehend von einem Fluideinleitungsort in Strömungsrichtung die Auslassöffnungsquerschnitte betragsmäßig größer werden sollten, um die reibungsbedingten Druckverluste zu kompensieren.

Wenngleich die Auslassöffnungsquerschnitte betragsmäßig kontinuierlich in Strömungsrichtung abnehmen können, ist es ausreichend und aus fertigungstechnischer Sicht vorteilhaft, den Kühlabschnitt in unterschiedliche Öffnungsbereiche einzuteilen, in welchen jeweils überwiegend oder bevorzugt vollständig Auslassöffnungen mit betragsmäßig einheitlichen Auslassöffnungsquerschnitten angeordnet sind.

Dann kann der Kühlabschnitt wenigstens zwei, vorzugsweise wenigstens drei, besonders bevorzugt wenigstens vier in Strömungsrichtung aufeinander folgende Öffnungsbereiche aufweisen, von welchen ein erster Öffnungsbereich wenigstens eine Auslassöffnung mit einem größeren Auslassöffnungsquerschnitt aufweist als ein in Strömungsrichtung unmittelbar auf den ersten Öffnungsbereich folgender zweiter Öffnungsbereich. Bevorzugt weist wiederum der zweite Öffnungsbereich wenigstens eine Auslassöffnung mit einem größeren Auslassöffnungsquerschnitt auf als ein in Strömungsrichtung unmittelbar auf den zweiten Öffnungsbereich folgender dritter Öffnungsbereich. Bei Vorhandensein eines vierten Öffnungsbereichs gilt für den dritten und den vierten Öffnungsbereichs mutatis mutandis das Gleiche.

Zusätzlich zu einer Anordnung, bei welcher eine stromabwärts einer ausgewählten Auslassöffnung gelegene weitere Auslassöffnung nur entweder einen gleich großen oder einen kleineren Auslassöffnungsquerschnitt als die ausgewählte Auslassöffnung aufweist, kann der Kühlabschnitt eine weiter stromaufwärts gelegene Öffnungszone umfassen, welche wenigstens zwei, vorzugsweise wenigstens drei in Strömungsrichtung aufeinander folgende Öffnungsbereiche aufweist von denen ein erster Öffnungsbereich wenigstens eine Auslassöffnung mit einem kleineren Auslassöffnungsquerschnitt aufweist als ein in Strömungsrichtung unmittelbar auf den ersten Öffnungsbereich folgender zweiter Öffnungsbereich. Somit kann in der stromaufwärts gelegenen Öffnungszone eine stromabwärts einer ausgewählten Auslassöffnung der Öffnungszone gelegene weitere Auslassöffnung der Öffnungszone einen größeren Auslassöffnungsquerschnitt aufweisen als die ausgewählte Auslassöffnung.

Eine Fluidleitung kann nur eine Reihe von längs der Leitungsbahn aufeinander folgende Auslassöffnungen aufweisen oder sie kann mehr als eine, insbesondere genau zwei Reihen von längs der Leitungsbahn aufeinander folgenden Auslassöffnungen aufweisen. Letzteres ist beispielsweise dann der Fall, wenn mit einer Fluidleitung zwei nebeneinander und mit Abstand voneinander mit parallelen Folgeachsen angeordnete Spulenanordnungen gekühlt werden sollen. Dann strömt Fluid aus jeder Reihe von Auslassöffnungen bevorzugt zu einer anderen Spulenanordnung hin.

Im Falle einer Fluidleitung mit nur genau einer Reihe von längs der Leitungsbahn mit Abstand voneinander angeordneten Auslassöffnungen ist häufig, aber nicht ausschließlich, der erstgenannte Fall bevorzugt, gemäß welchem für den gesamten Kühlabschnitt gilt, dass der Auslassöffnungsquerschnitt einer weiter stromabwärts gelegenen Auslassöffnung nur betragsmäßig kleiner ist als oder gleich groß ist wie eine weiter stromaufwärts gelegene Auslassöffnung. Dagegen hat sich für Fluidleitungen mit mehr als einer Reihe von Auslassöffnungen häufig, aber nicht ausschließlich, der letztgenannte Fall mit der stromaufwärts gelegenen Öffnungszone als vorteilhaft herausgestellt.

Bevorzugt schließt sich die Öffnungszone, in welcher der Auslassöffnungsquerschnitt einer weiter stromabwärts gelegenen Auslassöffnung nicht kleiner als der Auslassöffnungsquerschnitt einer weiter stromaufwärts gelegenen Auslassöffnung ist, unmittelbar an den Ort der Fluideinleitung in den Kühlabschnitt an. Bevorzugt ist die Öffnungszone die einzige Öffnungszone des Kühlabschnitts, sodass stromabwärts im Anschluss an die Öffnungszone die Auslassöffnungsquerschnitte nur entweder kleiner werden oder abschnittsweise gleich groß bleiben. Bevorzugt ist die Öffnungszone, gemessen längs der Leitungsbahn, kürzer als die Gesamtheit der daran anschließenden Öffnungsbereiche mit in Strömungsrichtung kleiner werdenden Auslassöffnungen.

Für eine möglichst gleichmäßige Kühlrate längs der Leitungsbahn bei gleichzeitig ausreichender Kühlwirkung weisen wenigstens zwei, vorzugsweise mehr als zwei, der in Strömungsrichtung hintereinander gelegenen Öffnungsbereiche eine unterschiedliche Anzahl an Auslassöffnungen oder/und eine unterschiedliche Länge längs der Leitungsbahn auf.

Bei bevorzugten kreisrunden Auslassöffnungen, wie sie einfach durch Bohrungen gebildet sein können, ändert sich der Auslassöffnungsdurchmesser stromaufwärts der Längsmitte des Kühlabschnitts von einem weiter stromaufwärts gelegenen Öffnungsbereich zum stromabwärts unmittelbar benachbarten Öffnungsbereich bezogen auf den größeren Durchmesser bevorzugt um nicht mehr als 10 %. Stromabwärts der Längsmitte des Kühlabschnitts, insbesondere in den letzten 25 % der Länge des Kühlabschnitts kann die Änderung der Auslassöffnungsdurchmesser von einem weiter stromaufwärts gelegenen Öffnungsbereich zu einem stromabwärts unmittelbar auf diesen folgenden Öffnungsbereich bezogen auf den größeren der vorliegenden Durchmesser bis zu 25 % betragen. Dies bedeutet, dass bevorzugt der Auslassöffnungsdurchmesser vom Ort der Fluideinleitung in den Kühlabschnitt bis zum Ende des Kühlabschnitts progressiv kleiner wird.

Innerhalb eines Öffnungsbereichs sind die Auslassöffnungsquerschnitte aller Auslassöffnungen des Öffnungsbereichs bevorzugt betragsmäßig gleich groß, sodass die Auslassöffnungen eines Öffnungsbereichs mit ein und demselben Werkzeug hergestellt werden können. Dies gilt vorzugsweise für jeden Öffnungsbereich.

Ebenso gilt zur Erzielung einer möglichst gleichmäßigen Kühlrate längs der Leitungsbahn durch aus den Auslassöffnungen austretendes Fluid für die Abstände zwischen unmittelbar längs der Leitungsbahn aufeinanderfolgenden Auslassöffnungen, dass in einem weiter stromabwärts gelegenen Abstandsbereich des Kühlabschnitts Auslassöffnungen längs der Leitungsbahn mit kleinerem Abstand voneinander angeordnet sind als in einem weiter stromaufwärts gelegenen Abstandsbereich.

Einzelne Abstandsbereiche können mit Öffnungsbereichen längs der Leitungsbahn überlappen. In der Regel weist ein Kühlabschnitt jedoch bevorzugt weniger Abstandsbereiche als Öffnungsbereiche auf. Definitionsgemäß soll ein Öffnungsbereich in der Abstandsmitte zwischen zwei Auslassöffnungen mit unterschiedlichen Auslassöffnungsquerschnitten beginnen und enden. Ein Abstandsbereich beginnt und endet an der jeweiligen die Auslassöffnung durchsetzenden Mittellinie einer Auslassöffnung, deren stromaufwärts unmittelbar benachbarte Auslassöffnung mit einem anderen Abstand entfernt gelegen ist als deren stromabwärts unmittelbar benachbarte Auslassöffnung.

Zur vorteilhaften Vergeichmäßigung der erzielbaren Kühlrate längs der Leitungsbahn weist der Kühlabschnitt bevorzugt wenigstens zwei in Strömungsrichtung aufeinander folgende Abstandsbereiche auf, von welchen in einem ersten Abstandsbereich Auslassöffnungen mit größerem Abstand aufeinander folgend angeordnet sind als in einem in Strömungsrichtung unmittelbar auf den ersten Abstandsbereich folgenden zweiten Abstandsbereich. Ein Abstandsbereich kann sich über mehr als die Hälfte der Länge des Kühlabschnitts erstrecken. Bevorzugt erstreckt sich ein derart langer Abstandsbereich wenigstens über die gesamte stromabwärtige Längshälfte des Kühlabschnitts.

Im Grunde gilt für die Abstandsbereiche mutatis mutandis das Gleiche wie für die Öffnungsbereiche, sodass zur weiteren Vergeichmäßigung der erzielbaren Kühlrate längs der Leitungsbahn vorteilhafterweise wenigstens zwei in Strömungsrichtung hintereinander gelegene Abstandsbereiche eine unterschiedliche Anzahl an Auslassöffnungen oder/und eine unterschiedliche Länge längs der Leitungsbahn aufweisen können.

Ebenso ist es aus fertigungstechnischer Sicht vorteilhaft einfach, wenn für wenigstens einen Abstandsbereich, vorzugsweise für jeden Abstandsbereich, gilt, dass die Abstände zwischen zwei in Strömungsrichtung unmittelbar aufeinander folgenden Auslassöffnungen für alle Auslassöffnungen des Abstandsbereichs betragsmäßig gleich groß sind.

Unabhängig von den beschriebenen Maßnahmen zur Vergeichmäßigung der erzielbaren Kühlrate längs der Leitungsbahn durch betragsmäßig unterschiedliche Ausgestaltung der Auslassöffnungsquerschnitte oder/und durch Wahl unterschiedlicher Abstandsabmessungen zwischen längs der Leitungsbahn unmittelbar aufeinander folgenden Auslassöffnungen kann am Kühlabschnitt eine unerwünschte Geräuschemission aufgrund des die Auslassöffnungen durchströmenden Fluids entstehen. Da der Kühlabschnitt häufig kontinuierlich oder im Bedarfsfall über einen längeren Zeitraum mit Fluid durchströmt wird, wird die Geräuschemission als Dauerton wahrgenommen, welcher nicht dauerhaft hinter üblichen Umweltgeräuschen zurücktritt, insbesondere dann nicht, wenn die Linearmotor-Statoranordnung sich ausreichend nahe an potentiellen Menschenansammlungen befindet, etwa in der Nähe eines Bahnhofs für einen Personenwechsel eines Fahrgastträgers, insbesondere eines Fahrgeschäfts zur Volksbelustigung.

Als Maßnahme zur Verringerung einer Geräuschemission hat es sich als vorteilhaft herausgestellt, wenn längs eines Trennbereichs im Kühlabschnitt eine Trennwand im Inneren der Fluidleitung angeordnet ist, welche längs ihrer Erstreckung ein Innenvolumen der Fluidleitung körperlich in zwei voneinander getrennte Teilvolumina unterteilt. Diese Maßnahme kann bevorzugt zusätzlich zu den zuvor genannten Maßnahmen zur Ausbildung unterschiedlicher Auslassöffnungsquerschnitte oder/und Abstände angewendet werden oder auch alternativ hierzu. Der Trennbereich kann daher auch an einem Kühlabschnitt ausgebildet sein, welcher nur Auslassöffnungen mit gleichem Auslassöffnungsquerschnitt aufweist, die aufeinanderfolgend mit einem einzigen einheitlichen Abstand voneinander längs der Leitungsbahn angeordnet sind.

Grundsätzlich kann die Trennwand längs ihrer Erstreckung in der Fluidleitung das Innenvolumen der Fluidleitung in unterschiedlich große Teilvolumina unterteilen. Für eine möglichst deutliche Geräuschminderung ist es jedoch vorteilhaft, wenn die Teilvolumina sich betragsmäßig nicht zu sehr unterscheiden. Bevorzugt ist daher vorgesehen, dass die beiderseits der Trennwand gelegenen Teilvolumina sich, bezogen auf ein größeres der Teilvolumina, in ihrer Größe um nicht mehr als 10 %, vorzugsweise um nicht mehr als 5 % unterscheiden, wobei besonders bevorzugt die beiderseits der Trennwand gelegenen Teilvolumina gleich groß sind. Bevorzugt sind beide Teilvolumina längs der Leitungsbahn offen und von Fluid durchströmbar. Bevorzugt erstreckt sich die Trennwand längs der Leitungsbahn kollinear mit bzw. parallel zur Leitungsbahn. Orthogonal zur Leitungsbahn erstreckt sich die Trennwand bevorzugt längs einer Durchmesserrichtung von einem Innenwandabschnitt der Fluidleitung zu einem diametral gegenüberliegenden Innenwandabschnitt der Fluidleitung.

Die Dicke der Trennwand ist vorzugsweise über ihre gesamte Flächenausdehnung konstant. Die Dicke der Trennwand unterscheidet sich bevorzugt betragsmäßig um nicht mehr als 50 % von der Dicke der Wand der Fluidleitung im Trennbereich, bezogen auf die Wanddicke der Fluidleitung. Alternativ oder zusätzlich sollte die Dicke der Trennwand gemäß einer vorteilhaften Weiterbildung der vorliegenden Erfindung derart gewählt sein, dass bei einer Betrachtung eines zur Leitungsbahn orthogonalen Querschnitts die Querschnittsfläche der Trennwand nicht mehr als 10 % der Querschnittsfläche des von der Wand der Fluidleitung umschlossenen Innenvolumens der Fluidleitung einnimmt. Dies gilt bevorzugt für wenigstens die Hälfte, besonders bevorzugt für wenigstens drei Viertel, noch stärker bevorzugt für 100 % der Länge der Trennwand.

Grundsätzlich kann die Trennwand eine gekrümmte Trennwand sein, wobei dies für die gewünschte Geräuschminderung nicht notwendig ist. Aus Gründen einer leichten Montage ist daher bevorzugt die Trennwand eine ebene Trennwand.

Die Trennwand kann, insbesondere wenn sie sich längs einer Durchmesserrichtung erstreckt, in das Innenvolumen der Fluidleitung eingelegt und dort in Berührkontakt mit Innenwandabschnitten der Fluidleitung reibschlüssig gehalten sein. Für eine sicherere Anordnung und Verankerung der Trennwand im Innenvolumen der Fluidleitung kann die Trennwand mit der Innenwand der Fluidleitung verklebt oder verlötet oder verschweißt sein. Die Fluidleitung kann hierzu aus wenigstens zwei zu einem Rohr gefügten Schalenbauteilen gebildet sein, um die Herstellung einer dauerhaften Verbindung der Trennwand mit der Fluidleitung zu erleichtern.

Da die Fluidleitung in einer bevorzugten Ausgestaltung mehr Öffnungsbereiche als Abstandsbereiche aufweist, ist es bevorzugt, wenn sich die Trennwand über mehr als einen Öffnungsbereich erstreckt. Somit liegen im Trennbereich Auslassöffnungen mit unterschiedlichen Auslassöffnungsquerschnitten.

Wenngleich es ebenfalls möglich ist, dass sich die Trennwand über mehr als einen Abstandsbereich erstreckt, ist es jedoch bevorzugt, wenn sich die Trennwand vollständig innerhalb eines Abstandsbereichs erstreckt. Der Abstandsbereich, in welchem sich die Trennwand erstreckt und welcher somit den Trennbereich enthält oder der Trennbereich ist, ist bevorzugt der größte Abstandsbereich im Kühlabschnitt.

Für die geräuschmindernde Wirkung der Trennwand ist es sowohl vorteilhaft, wenn die Trennwand längs der Leitungsbahn weder zu lange noch zu kurz ist. Daher ist die Trennwand bevorzugt kürzer als der Kühlabschnitt. Gemäß einer bevorzugten Ausführungsform erstreckt sich die Trennwand über mehr als 40 %, vorzugsweise über mehr als 50 % der Länge des Kühlabschnitts. Ebenso bevorzugt erstreckt sich die Trennwand über weniger als 75 %, vorzugsweise über weniger als 65 % der Länge des Kühlabschnitts.

Wie Versuche gezeigt haben, hat die Anordnung einer Trennwand in der Nähe des Einleitungsortes des Fluids in den Kühlabschnitt eine nur geringe geräuschmindernde Wirkung. Bevorzugt wird das Fluid an einem Längsende des Kühlabschnitts in diesen eingeleitet und strömt von diesem Einleitungs-Längsende entlang der Leitungsbahn durch den Kühlabschnitt bis zu dem dem Einleitungs-Längsende entgegengesetzten Längsende des Kühlabschnitts. Bevorzugt ist die Trennwand mit wenigstens 70 % ihrer Längserstreckung, vorzugsweise mit wenigstens 80 % ihrer Längserstreckung, in einem stromabwärts der Längsmitte des Kühlabschnitts gelegenen Bereich angeordnet. Damit ist die Trennwand ausreichend weit vom Einleitungs-Längsende entfernt, um mit zunehmender Entfernung des Fluids vom Einleitungs-Längsende eine Geräuschemission zu unterdrücken.

Grundsätzlich kann daran gedacht sein, dass die Trennwand bis zu dem dem Einleitungs-Längsende längs der Leitungsbahn entgegengesetzten Längsende des Kühlabschnitts und vorzugsweise auch der Fluidleitung insgesamt reicht. Bevorzugt endet die Trennwand jedoch in Strömungsrichtung vor dem Längsende des Kühlabschnitts und insbesondere vor dem Längsende der Fluidleitung, um am Ende des Kühlabschnitts bzw. der Fluidleitung eine Umlenkung von Fluid zu ermöglichen. In Strömungsrichtung schließt sich daher an den Trennbereich ein Bereich des Kühlabschnitts an, in dem das Innenvolumen der Fluidleitung, wie ebenso stromaufwärts des Trennbereichs, nicht mehr unterteilt ist. Die Trennwand ist daher bevorzugt mit Abstand von beiden Längsenden des Kühlabschnitts angeordnet.

Da in Strömungsrichtung des Fluids über den Kühlabschnitt hinaus keine Strömung von Fluid mehr notwendig oder hilfreich ist, endet vorzugsweise die Fluidleitung dort, wo auch der Kühlabschnitt endet. Dann, wenn der Kühlabschnitt bevorzugt durch eine Rohrleitung ausgebildet ist, weist die Rohrleitung am stromabwärtigen Ende eine Stirnwand oder einen Stopfen auf, um eine Strömung von Fluid über das stromabwärtige Ende des Kühlabschnitts hinaus zu verhindern.

Unabhängig davon, ob der Kühlabschnitt nur eine oder mehrere zueinander parallele Reihen von Auslassöffnungen aufweist, ist es zur Erzielung einer möglichst geringen Geräuschemission des Fluid auslassenden Kühlabschnitts vorteilhaft, wenn alle im Trennbereich angeordneten Auslassöffnungen auf derselben Seite der Trennwand angeordnet sind. Weist der Kühlabschnitt nur eine zur Leitungsbahn parallele Reihe von Auslassöffnungen auf, befinden sich diese Auslassöffnungen bevorzugt in der Umfangsmitte um die Leitungsbahn des zusammen mit der Trennwand ein Teilvolumen des Innenvolumens der Fluidleitung abgrenzenden Wandabschnitts der Fluidleitung. Umfasst der Kühlabschnitt mehr als eine Reihe von Auslassöffnungen, wobei die Mehrzahl von Reihen bevorzugt jeweils längs einer zur Leitungsbahn parallelen Anordnungsachse verlaufen, sind die Auslassöffnungen bevorzugt in Umfangsrichtung um die Leitungsbahn symmetrisch zur Umfangsmitte des zusammen mit der Trennwand ein Teilvolumen des Innenvolumens der Fluidleitung abgrenzenden Wandabschnitts der Fluidleitung angeordnet.

Allgemein formuliert ist bevorzugt eine Mehrzahl von Auslassöffnungen bzw. sind besonders bevorzugt alle Auslassöffnungen derart angeordnet, dass ihre eine Leitungswand der Fluidleitung durchsetzenden virtuellen Mittellinien in einem Winkelbereich von nicht mehr als 90°, vorzugsweise von nicht mehr als 80°, besonders bevorzugt von nicht mehr als 75°, um die Leitungsbahn gelegen sind. Dann kann sichergestellt sein, dass bei Anordnung des Kühlabschnitts mit zur Folgeachse paralleler Leitungsbahn eine ausreichende Kühlwirkung an der Spulenanordnung erzielt wird, wobei jede Auslassöffnung einen Beitrag zur Kühlwirkung leistet.

Die Linearmotor-Statoranordnung kann beiderseits einer Spulenanordnung je eine Fluidleitung mit einem wie oben beschrieben ausgestalteten Kühlabschnitt aufweisen, um die Spulenanordnung zu beiden Seiten konvektiv kühlen zu können. Eine solche Anordnung aus einer Spulenanordnung mit beidseitig neben ihr mit Abstand angeordneten Kühlabschnitten ist eine Linearmotor-Statoranordnung, von welchen entweder mehrere nebeneinander, also mit mehreren parallelen Spulenanordnungen, zur Erzielung möglichst hohen Antriebskraft oder/und mehrere längs einer gemeinsamen Folgeachse hintereinander, also mit kollinearen bzw. komplanaren Spulenanordnungen, zu Erzielung einer Antriebskraft über eine möglichst lange Strecke angeordnet sein können.

Dann, wenn zwei Spulenanordnungen mit zueinander parallelen Folgeachsen nebeneinander angeordnet werden sollen kann ihr Abstand voneinander orthogonal zur Folgeachse ohne Einbuße der erzielbaren Kühlwirkung dadurch verkürzt werden, dass zwischen den Spulenanordnungen anstelle von zwei Fluidleitungen mit je einem Kühlabschnitt für jede Spulenanordnung, nur eine Fluidleitung mit einem Kühlabschnitt, jedoch mit wenigstens einer Reihe von Auslassöffnungen für jede Spulenanordnung angeordnet ist.

Um eine Behinderung der magnetischen Wechselwirkung der Linearmotor-Statoranordnung mit dem eingangs genannten Wechselwirkungsbauteil auszuschließen, ist vorzugsweise jeder Kühlabschnitt einer Spulenanordnung so angeordnet, dass bei Betrachtung der Spulenanordnung längs der üblicherweise zueinander parallelen Wicklungsachsen der in der Spulenanordnung angeordneten bestrombaren Spulen der Kühlabschnitt nicht mit den Spulen überlappt.

Die vorliegende Erfindung wird nachfolgend anhand der beiliegenden Zeichnungen näher erläutert. Es stellt dar:
- Figur 1: eine perspektivische Ansicht einer ersten Ausführungsform einer erfindungsgemäßen Linearmotor-Statoranordnung der vorliegenden Anmeldung,
- Figur 2: eine Aufrissansicht der Linearmotor-Statoranordnung der ersten Ausführungsform längs der Folgeachse,
- Figur 3: eine Draufsicht auf die Linearmotor-Statoranordnung der ersten Ausführungsform,
- Figur 4: ein Rohrbauteil zur Bildung eines Kühlabschnitts der Fluidleitungen der Linearmotor-Statoranordnung der ersten Ausführungsform,
- Figur 5: eine teilgeschnittene Ansicht des Rohrbauteils von Figur 4 mit vollständig dargestellter Trennwand im Inneren des Kühlabschnitts,
- Figur 6: eine Querschnittsansicht durch das Rohrbauteil von Figur 5 längs der gekröpften Schnittebene VI-VI von Figur 5,
- Figur 7: eine perspektivische Ansicht einer zweiten Ausführungsform einer erfindungsgemäßen Linearmotor-Statoranordnung der vorliegenden Anmeldung,
- Figur 8: eine Aufrissansicht der Linearmotor-Statoranordnung der zweiten Ausführungsform längs der Folgeachse,
- Figur 9: eine Draufsicht auf die Linearmotor-Statoranordnung der zweiten Ausführungsform,
- Figur 10: ein Rohrbauteil zur Bildung eines Kühlabschnitts der zwischen zwei parallelen Spulenanordnungen angeordneten Fluidleitung der Linearmotor-Statoranordnung der zweiten Ausführungsform,
- Figur 11: eine teilgeschnittene Ansicht des Rohrbauteils von Figur 10 mit vollständig dargestellter Trennwand im Inneren des Kühlabschnitts, und
- Figur 12: eine Querschnittsansicht durch das Rohrbauteil von Figur 5 längs der gekröpften Schnittebene XII-XII von Figur 10.

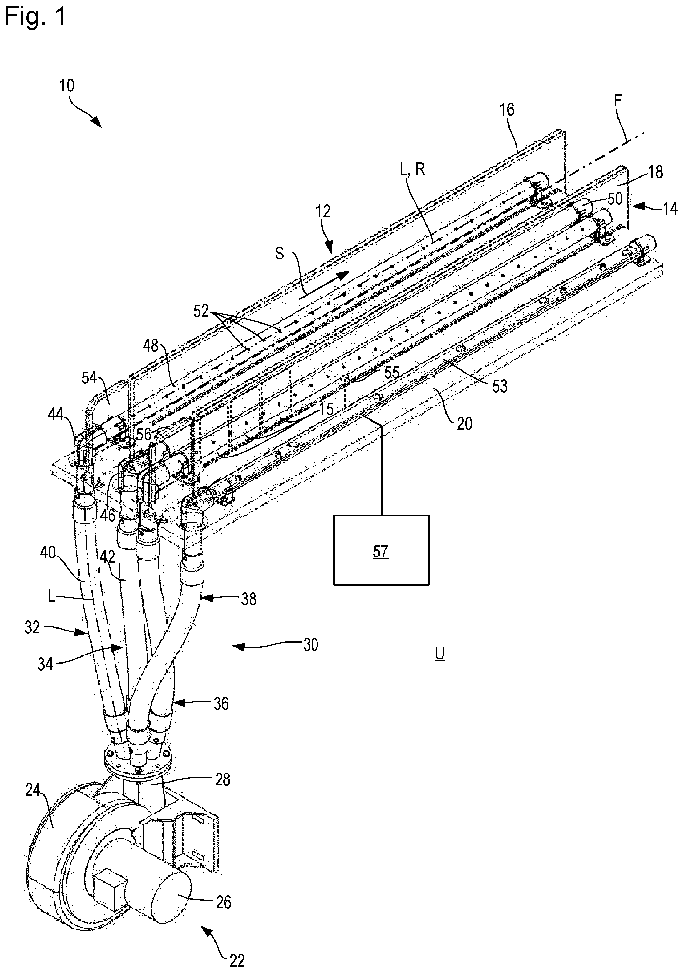

**In** Figur 1 ist eine erste Ausführungsform einer erfindungsgemäßen Linearmotor-Statoranordnung allgemein mit 10 bezeichnet. Die Linearmotor-Statoranordnung 10 ist in der vorliegenden Anmeldung auch nur kurz als "Statoranordnung 10" bezeichnet. Die Statoranordnung 10 umfasst zwei zueinander parallele Spulenanordnungen 12 und 14, welche sich längs einer gemeinsamen Folgeachse F erstrecken. Zur besseren Übersichtlichkeit der Darstellung sind die Spulenanordnungen 12 und 14 nur mit einer strichlinierten Phantomlinie angedeutet, sodass der Betrachter von Figur 1 durch die an sich blickdichten Spulenanordnungen hindurch blicken kann. Ebenso sind nur für die Spulenanordnung 14 drei längs der Folgeachse F aufeinander folgende bestrombare Spulen 15 angedeutet. Die Wicklungsachsen der Spulen 15 verlaufen orthogonal zur Folgeachse F in Dickenrichtung der Spulenanordnungen 12 bzw. 14.

Die Spulenanordnungen 12 und 14, welche jeweils ein Spulengehäuse 16 bzw. 18 aufweisen, das die darin aufgenommenen Spulen 15 vollständig umschließt, sind auf eine Trägerplatte 20 montiert. Die Trägerplatte 20 kann an einem Vorrichtungsgestell einer vorbestimmten Fahrstrecke eines mit der Statoranordnung 10 zur Bewegung längs der Folgeachse F antreibbaren Fahrzeugs vorrichtungsfest montiert sein. Das antreibbare Fahrzeug kann beispielsweise ein durch Schienen oder Rinnen spurgebundener Fahrgastträger eines Fahrgeschäfts einer Volksbelustigungsvorrichtung sein.

Die Statoranordnung 10 umfasst weiter eine Fördervorrichtung 22, umfassend ein Gebläse 24 und einen Gebläseantrieb 26. Die Fördervorrichtung 22 saugt mit dem Gebläse 24 in an sich bekannter Weise Luft aus der Umgebung U der Statoranordnung 10 an und gibt diese an einem Gebläseauslass 28 in eine Förderleitungsanordnung 30 mit vier Förderleitungen 32, 34, 36 und 38 ein.

Die beiden Förderleitungen 32 und 34 dienen der konvektiven Kühlung der Spulenanordnung 12. Die Förderleitungen 36 und 38 dienen der konvektiven Kühlung der Spulenanordnung 14. Im vorliegenden Beispiel sind die Baugruppen aus Spulenanordnung 12 und Förderleitungen 32 und 34 einerseits sowie aus Spulenanordnung 14 und Förderleitungen 36 und 38 andererseits identisch ausgebildet. Die genannten Baugruppen sind zur Verstärkung der längs der Folgeachse F erzielbaren Antriebskraft nebeneinander angeordnet.

Es reicht daher nachfolgend aus, nur eine der Baugruppen stellvertretend für beide zu beschreiben, da deren Beschreibung auch für die jeweils andere Baugruppe gilt.

Die Fluidleitungen 32 und 34 weisen ausgehend vom Gebläseauslass 28 zunächst jeweils einen flexiblen Schlauch 40 bzw. 42 auf, welche über eine Verbinder-Baugruppe 44 bzw. 46, vorliegend jeweils eine L-Verbinder-Baugruppe, mit einem Rohrbauteil 48 bzw. 50 verbunden sind. Die beiden Rohrbauteile 48 bzw. 50, welche entgegengesetzte Seiten des Spulengehäuses 16 über Auslassöffnungen 52 anblasen, sind identisch ausgebildet und bezüglich einer das Spulengehäuse 16 in dessen Dickenmitte durchsetzenden Symmetrieebene SE spiegelsymmetrisch angeordnet.

Durch das in Figur 1 dem Betrachter nächstgelegene Rohrbauteil zur Kühlung der dem Betrachter von Figur 1 zugewandten Außenseite des Statorgehäuses 18 hindurch ist eine Befestigungsleiste 53 zur Befestigung der Spulenanordnung 16 und des Spulengehäuses 18 an der Trägerplatte 20 erkennbar. Anstelle von L-Verbinder-Baugruppen können auch T-Verbinder-Baugruppen verwendet sein, wenn längs der Folgeachse F vor und hinter den Verbinder-Baugruppen Kühlabschnitte angeordnet sein sollen.

In dem Bereich zwischen den Verbinder-Baugruppen 44 und 46 ist eine Sensorvorrichtung 54 angeordnet, welche ein Magnetfeld einer sich der Spulenanordnung 12 längs der Folgeachse F in Figur 1 von links annähernden Magnetanordnung als einem mit der Statoranordnung 10, insbesondere der Spulenanordnung 12, magnetisch wechselwirkenden Läuferbauteil eines aus Statoranordnung 10 und Läuferbauteil gebildeten Linearmotors erfasst und so die Position des Magnetbauteils ermittelt. Eine identische Sensorvorrichtung 56 ist in entsprechender Position vor der Spulenanordnung 14 angeordnet. Die Sensorvorrichtung 54 und 56 können beispielsweise jeweils wenigstens einen Hall-Sensor umfassen, um das Magnetfeld des relativ zur Statoranordnung 10 bewegten Läuferbauteils zu erfassen.

Ein Temperatursensor 55 im Spulengehäuse 18 erfasst die Temperatur im Spulengehäuse 18 und gibt das Erfassungsergebnis an eine Steuervorrichtung 57 aus. Die Steuervorrichtung 57 steuert nach Maßgabe des Erfassungssignals des Temperatursensors 55 den Gebläseantrieb 26. Auch im Spulengehäuse 16 ist ein Temperatursensor 55 angeordnet und mit der Steuervorrichtung 57 signalübertragungsmäßig verbunden. Dieser ist der besseren Übersichtlichkeit wegen nur nicht dargestellt.

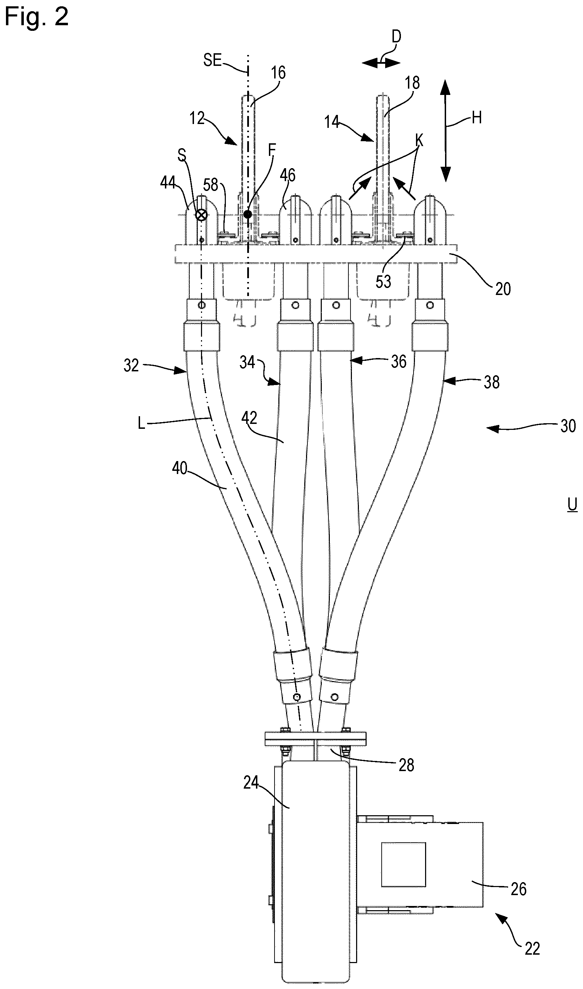

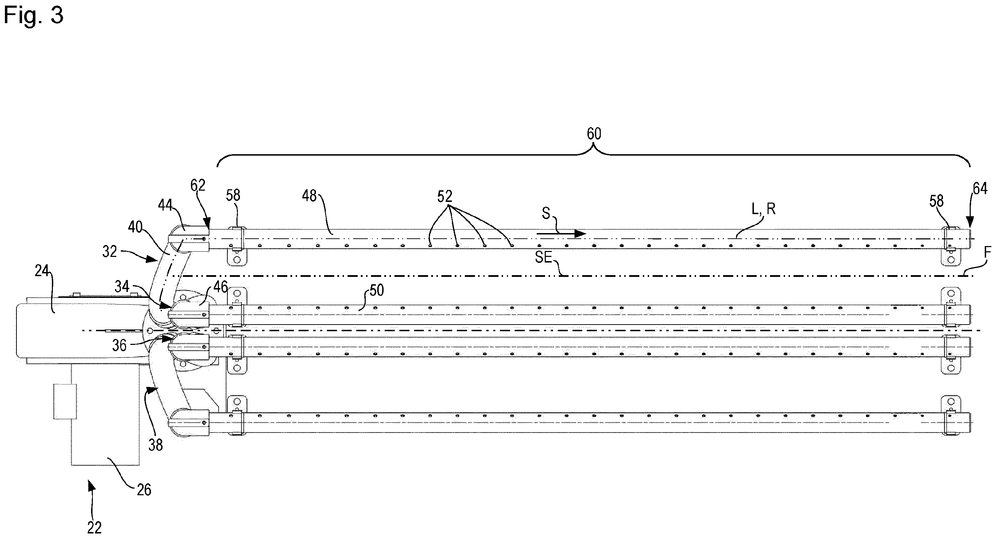

In Figur 2 ist die Symmetrieebene SE, bezüglich welcher die Rohrbauteile 50 und 52 spiegelsymmetrisch angeordnet sind, besser zu erkennen als in Figur 1. In Figur 3 sind der besseren Übersichtlichkeit halber die Spulenanordnungen 12 und 14 gemeinsam mit ihren Spulengehäusen 16 und 18 ebenso weggelassen wie die Sensorvorrichtungen 54 und 56. In beiden Figuren 2 und 3 ist die Symmetrieebene SE jeweils orthogonal zur Zeichenebene orientiert. Die zu den parallelen Wicklungsachsen der Spulen 15 parallele Dickenrichtung der Spulenanordnungen 12 und 14 sowie der Spulengehäuse 16 und 18 ist in Figur 2 mit D bezeichnet. Die Höhenrichtung der Spulenanordnungen 12 und 14 sowie der Spulengehäuse 16 und 18 ist in Figur 2 mit H bezeichnet. Dickenrichtung D, Höhenrichtung H und die Folgeachse F sind jeweils orthogonal zueinander.

Beispielhaft für die Fluidleitung 32 ist in den Figuren 1 bis 3 eine virtuelle Leitungsbahn L dargestellt, welche als die Fluidleitung 32 zentral durchsetzend gedacht ist. Die Leitungsbahn L verläuft im Bereich des flexiblen Schlauchs 40 gekrümmt, im Bereich der Verbinder-Baugruppe 44 L-förmig und längs des Rohrbauteils 48 geradlinig. Der im Rohrbauteil 48 gelegene Abschnitt der Leitungsbahn L fällt mit der Rohrachse R des Rohrbauteils 48 zusammen. Das Rohrbauteil 48 kann eine beliebige Querschnittsgestalt aufweisen, etwa quadratisch, rechteckig oder allgemein polygonal, ist jedoch bevorzugt ein zylindrisches Rohrbauteil, da diese Gestalt bei der Montage der Statoranordnung 10 eine einfache Orientierung der Auslassöffnungen 52 zur Spulenanordnung 12 hin durch Drehung des Rohrbauteils 48 um seine Rohrachse R gestattet. Das Rohrbauteil 48 ist durch längs der Rohrachse R mit Abstand voneinander angeordnete Klemmhalterungen 58 gehalten, welche als gelöste Klemmhalterungen 58 bei verringerter Klemmkraft eine Drehung des in ihnen gehaltenen Rohrbauteils 48 um die Rohrachse R gestatten. Wenn die gewünschte Winkelorientierung der Auslassöffnungen 52 um die Rohrachse R und somit auch um den im Rohrbauteil 48 gelegenen geradlinigen Abschnitt der Leitungsbahn L erreicht ist, können die Klemmhalterungen 58 festgezogen und das Rohrbauteil 48 so fixiert werden.

Wie man in Figur 3 erkennen kann, bildet das Rohrbauteil 48 einen Kühlabschnitt 60, längs welchem von der Fördervorrichtung 22 geförderte Luft zu der Statoranordnung 12, zu welcher die Auslassöffnungen 52 hinweisen, als konvektiv kühlende Luft austritt. In das Rohrbauteil 48 wird dabei an seinem einen Längsende als dem mit der Verbinder-Baugruppe 44 unmittelbar gekoppelten Einleitungs-Längsende 62 Luft eingeleitet, welche in Strömungsrichtung S das Rohrbauteil 48 durchströmt. Das dem Einleitungs-Längsende 62 entgegengesetzte Längsende 64 des Rohrbauteils 48 ist durch eine zur Leitungsbahn L orthogonale Stirnwand verschlossen. Die von der Fördervorrichtung 22 mit Überdruck gegenüber dem Umgebungsdruck in das Rohrbauteil 48 und damit in den Kühlabschnitt 60 eingeleitete Luft kann folglich nur durch die Auslassöffnungen 52 zur Spulenanordnung 12 hin austreten.

In Figur 2 ist der besseren Übersichtlichkeit halber an der Spulenanordnung 14 und den mit Abstand von dieser angeordneten Fluidleitungen 36 und 38 durch die Pfeile K der Austritt des Fluids zur Spulenanordnung 14 hin angedeutet. Da die Spulenanordnung 14 mit den zu ihrer konvektiven Kühlung vorgesehenen Fluidleitungen 36 und 38 identisch zur Spulenanordnung 12 mit den Fluidleitungen 32 und 34 ausgebildet ist, gilt die Darstellung der Pfeile K mutatis mutandis auch für das im Kühlabschnitt 60 von den Rohrbauteilen 48 und 50 zur Spulenanordnung 12 hin ausströmende Fluid.

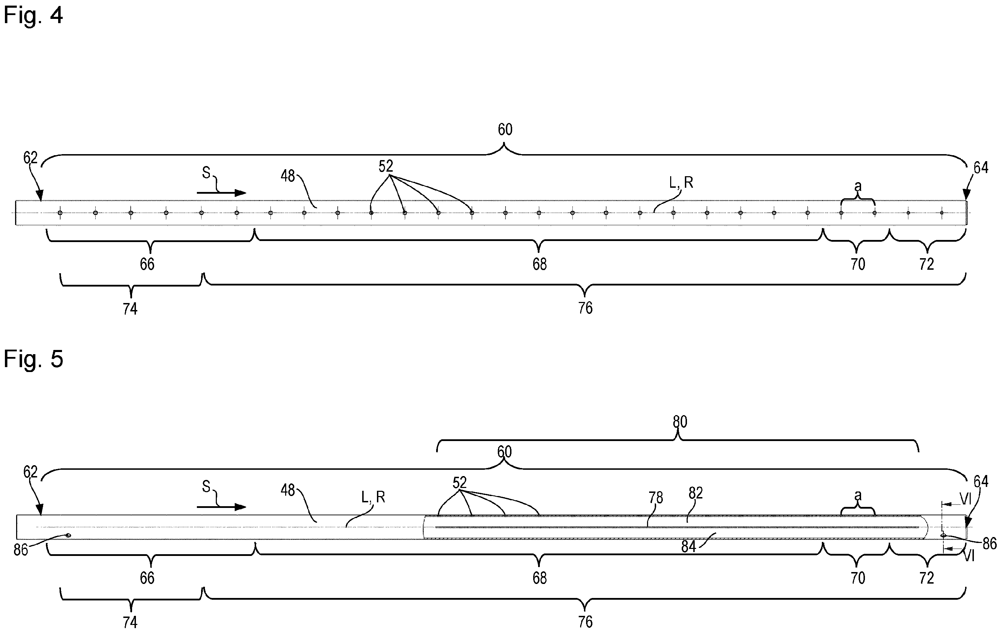

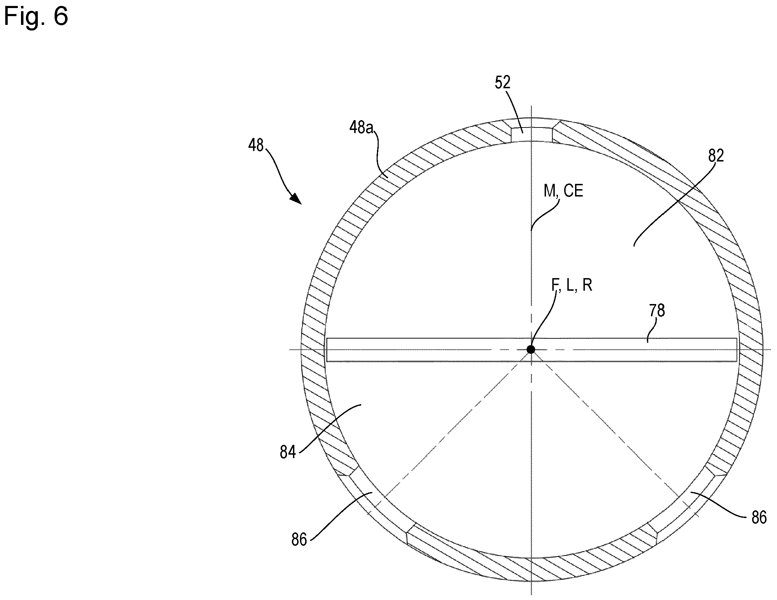

In Figur 4 ist das Rohrbauteil 48 in der Draufsicht dargestellt, mit Blickrichtung längs der orthogonal zur Zeichenebene von Figur 4 orientierten, die Wandung der Fluidleitung 32 im Kühlabschnitt 60 durchsetzenden Mittellinien M (siehe Figur 6) der Auslassöffnungen 52. Das Rohrbauteil 48 und das Rohrbauteil 50 sowie die der Spulenanordnung 14 zugeordneten Rohrbauteile sind identisch ausgebildet, sodass die Beschreibung des Rohrbauteils 48 für alle Rohrbauteile der ersten Ausführungsform gilt. Das Rohrbauteil 48 weist genau eine Reihe von längs der Folgeachse F bzw. längs des im Rohrbauteil 48 gelegenen Abschnitts der Leitungsbahn L hintereinander angeordneten Auslassöffnungen 52 auf.

Zur Bereitstellung einer ausreichenden Kühlung der Spulenanordnung 12 einerseits und zur Vergleichmäßigung der durch die aus den Auslassöffnungen 52 austretende Luft erzielten Kühlrate längs der Leitungsbahn L andererseits sind die Auslassöffnungen 52 mit betragsmäßig unterschiedlich großen Auslassöffnungsquerschnitten ausgebildet. Beispielsweise können die in Strömungsrichtung S auf das Eintritts-Längsende 62 folgenden ersten sechs Auslassöffnungen 52 einen identischen Auslassöffnungsquerschnitt aufweisen, welcher größer ist als der wiederum untereinander identische Auslassöffnungsquerschnitt der folgenden 17 Auslassöffnungen. Diese 17 Auslassöffnungen können wiederum einen größeren Auslassöffnungsquerschnitt als die folgenden nächsten beiden Auslassöffnungen aufweisen, deren identischer Auslassöffnungsquerschnitt wiederum größer ist als die identischen Auslassöffnungsquerschnitte der letzten beiden Auslassöffnungen 52 des Rohrbauteil 48 bzw. des Kühlabschnitts 60.

Somit weist der Kühlabschnitt 60 einen dem Einlass-Längsende 62 nächst gelegenen ersten Öffnungsbereich 66 mit Auslassöffnungen 52 mit einheitlichen größten Auslassöffnungsquerschnitten auf, weist einen an diesen in Strömungsrichtung S anschließenden zweiten Öffnungsbereich 68 mit wiederum einheitlichen Auslassöffnungsquerschnitten auf, die allerdings kleiner als im ersten Öffnungsbereich 66 sind, weist einen dritten Öffnungsbereich 70 mit zwei Auslassöffnungen 52 mit den zweitkleinsten Auslassöffnungsquerschnitten des Kühlabschnitts 60 auf und weist schließlich einen vierten Öffnungsbereich 72 mit zwei Auslassöffnungen 52 mit den kleinsten Auslassöffnungsquerschnitten auf.

Dabei können die beispielhaft kreisförmigen Auslassöffnungen 52 im zweiten Öffnungsbereich 68 einen um 8 bis 10 % kleineren Durchmesser aufweisen als die Auslassöffnungen 52 im ersten Öffnungsbereich 66. Der Durchmesser der beiden Auslassöffnungen 52 im dritten Öffnungsbereich 70 kann ebenfalls um 8 bis 10 % kleiner sein als der Durchmesser der Auslassöffnungen 52 im zweiten Öffnungsbereich 68. Der Durchmesser der Auslassöffnungen 52 im vierten Öffnungsbereich 72 kann sogar um 20 bis 25 % kleiner sein als jene der Auslassöffnungen 52 im dritten Öffnungsbereich 70. Alle Prozentangaben sind bezogen auf den jeweils größeren Durchmesser des bezeichneten Vergleichs.

Die Auslassöffnungsquerschnitte der Auslassöffnungen 52 werden also längs der Leitungsbahn L in Strömungsrichtung S nur kleiner oder bleiben für einen Abschnitt gleich groß, werden jedoch nicht größer.

Ebenso sind längs der Leitungsbahn L aufeinanderfolgende Auslassöffnungen 52 mit unterschiedlichen Abständen voneinander angeordnet, und zwar derart dass die Abstände zwischen zwei unmittelbar längs der Leitungsbahn L aufeinanderfolgenden Auslassöffnungen 52 in Strömungsrichtung S nur abschnittsweise gleich bleiben und kleiner werden, aber nicht größer werden.

So liegen die ersten sechs Auslassöffnungen 52 in einem ersten Abstandsbereich 74, in welchem längs der Leitungsbahn L unmittelbar aufeinanderfolgende Austrittsöffnungen 52 jeweils mit einem identischen Abstand a voneinander angeordnet sind, der auch der größte zwischen unmittelbar einander folgenden Austrittsöffnungen 52 des Rohrbauteils 48 bzw. des Kühlabschnitts 60 auftretende Abschnitt a ist.

Die restlichen 21 Auslassöffnungen 52 liegen im zweiten Abstandsbereich 76, in welchem die Abstände a zwischen zwei aufeinanderfolgenden Austrittsöffnungen 52 wiederum betragsmäßig gleich groß sind, jedoch kleiner als im ersten Abstandsbereich 74. Auch die Anordnung der Auslassöffnungen 52 in unterschiedlichen Abständen dient bei gleichzeitig gesicherter Kühlwirkung der Vergleichmäßigung der Kühlrate des Kühlabschnitts 60 längs der Leitungsbahn. Die Abstände zwischen Auslassöffnungen 52 im zweiten Abstandsbereich 76 sind etwa 4 bis 6 % kleiner als die Abstände im ersten Abstandsbereich 74. Wiederum sind die Prozentangaben bezogen auf den größeren der beiden miteinander verglichenen Abstände a.

Die am dargestellten Ausführungsbeispiel gezeigten Öffnungsbereiche und Abstandsbereiche sind lediglich ein bevorzugtes Ausführungsbeispiel. Die Öffnungsbereiche oder/und Abstandsbereiche können auch abweichend vom dargestellten Ausführungsbeispiel ausgestaltet sein.

Figur 5 zeigt das Rohrbauteil 48 im Teilschnitt und um 90° um die Rohrachse R bzw. um den im Kühlabschnitt 60 gelegenen Bereich der Leitungsbahn L derart gedreht, dass die Auslassöffnungen 52 in der Zeichenebene von Figur 5 liegen.

Im Inneren des Rohrbauteils 48 ist eine vorzugsweise ebene Trennwand 78 angeordnet, welche sich längs eines Trennbereichs 80 erstreckt. Innerhalb dieses Trennbereichs 80 unterteilt die Trennwand 78 das Innenvolumen des Rohrbauteils 48 in ein in Figur 5 oberes Teilvolumen 82 und ein unteres Teilvolumen 84. Längs der Leitungsbahn L vor und hinter den Trennbereich 80 ist das Innenvolumen des Rohrbauteils 48 ungeteilt.

Die Trennwand 78 erstreckt sich längs der Leitungsbahn L über etwas mehr als die Hälfte der Erstreckungslänge des Rohrbauteils 48 und, da das Rohrbauteil 48 an seinem dem Einlass-Längsende 62 näher gelegenen Bereich mit dem L-Verbinder-Bauteil 44 überlappt, über mehr als die Hälfte der Erstreckungslänge des Kühlabschnitts 60. Der Längenanteil des Trennbereichs 80 an der Längenerstreckung des Kühlabschnitts 60 ist daher größer als der Längenanteil des Trennbereichs 80 am Rohrbauteil 48.

Die Trennwand 78 erstreckt sich längs eines Durchmessers durch den Innenbereich des Rohrbauteils 48. Dies ist besonders gut in Figur 6 zu erkennen. Wie ebenfalls in Figur 6 zu erkennen ist, befinden sich die Auslassöffnungen 52 in der Umfangsmitte des das Teilvolumen 82 zusammen mit der Trennwand 78 umgebenden oberen Wandabschnitts 48a des Rohrbauteils 48. Nur das in Figur 6 obere Teilvolumen 82 ist durch Austrittsöffnungen 52 unmittelbar mit der Außenumgebung U verbunden. Alle Auslassöffnungen 52 befinden sich daher im selben, vorzugsweise halbzylindrischen, Wandabschnitt 48a. Die Mittellinien M der Auslassöffnungen 52 liegen bevorzugt in einer gemeinsamen Ebene CE, welche auch die Rohrachse R und damit den im Kühlabschnitt 60 gelegenen Bereich der Leitungsbahn L enthält. Die Mittellinien M sind daher orthogonal zur Trennwand 78 orientiert.

Die beiden in Figur 6 erkennbaren Öffnungen 86, welche wegen der gekröpften Schnittebene VI-VI nicht in einer gemeinsamen Ebene mit der Auslassöffnungen 52 liegen, dienen lediglich der vereinfachten Orientierung des Rohrbauteils 48 in den Klemmbefestigungen 58. Die Öffnungen 86 können mit Verrastungsformationen in den Klemmbefestigungen 58, beispielsweise mit federvorgespannten Kugeln, zur Herstellung eines überwindbaren Rasteingriffs wechselwirken. Ist der Rasteingriff hergestellt, haben die Auslassöffnungen 52 die gewünschte Orientierung relativ zu der Spulenanordnung 12 oder 14, der sie zugewandt sein sollen. Wegen der spiegelsymmetrischen Orientierung der Rohrbauteil 48 und 50 bezüglich der zwischen ihnen liegenden Spulenanordnung 12 sind auch die Öffnungen 86 spiegelsymmetrisch bezüglich der durch die Mittellinien M und die Rohrachse R aufgespannten Symmetrieebene CE angeordnet. Somit kann das Rohrbauteil 48 sowohl in der in Figur 1 für das Rohrbauteil 48 als auch für das Rohrbauteil 50 gezeigten Orientierung eingebaut werden.

Durch die Trennwand 78, die sich im dargestellten Beispiel in den Öffnungsbereich 68, 70 und 72, jedoch nur im Abstandsbereich 76 erstreckt, kann die Geräuschentwicklung durch die durch die Auslassöffnungen 52 austretende Luft erheblich reduziert werden.

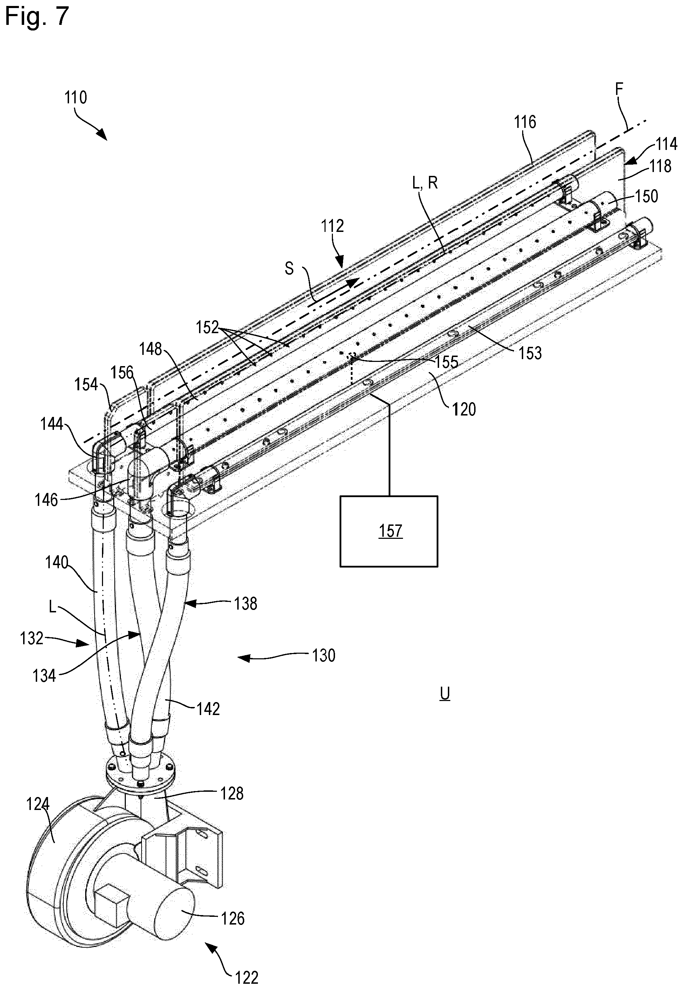

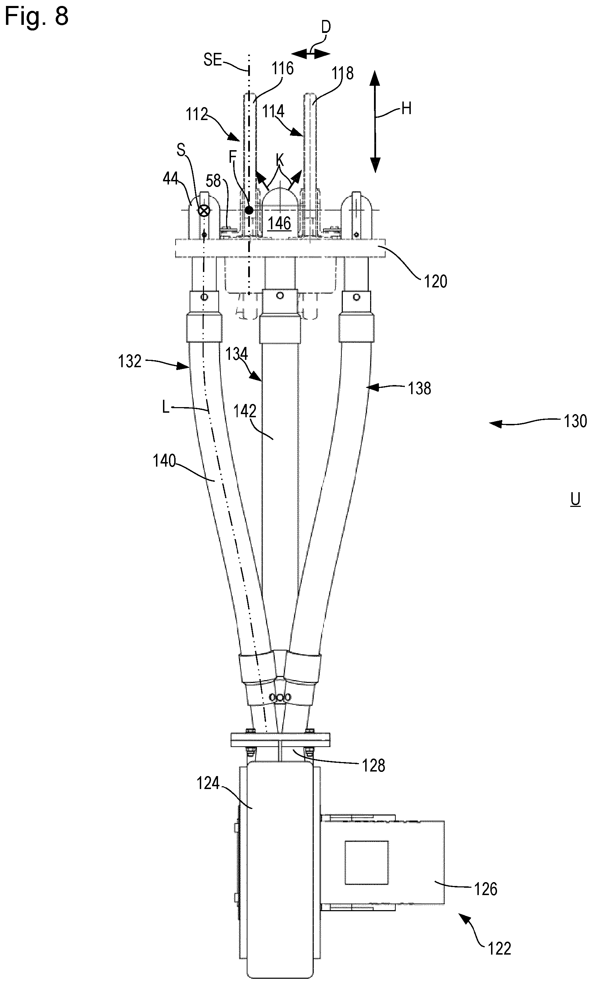

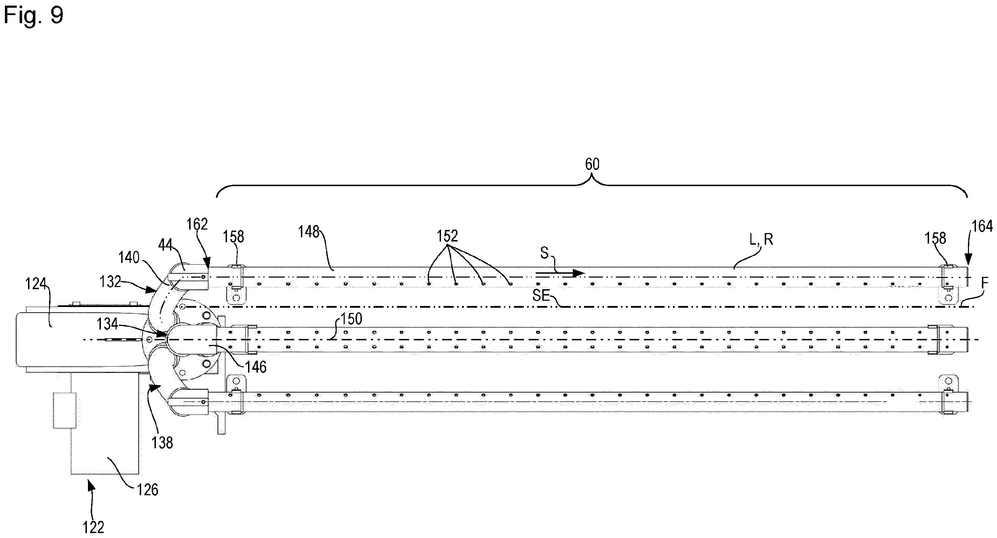

In Figur 7 ist in einer der Perspektive von Figur 1 entsprechenden Perspektive eine zweite Ausführungsform einer erfindungsgemäßen Statoranordnung 110 gezeigt. Gleiche und funktionsgleiche Bauteile und Bauteilabschnitte wie in der ersten Ausführungsform der Figuren 1 bis 6 sind in der zweiten Ausführungsform der Figuren 7 bis 12 mit gleichen Bezugszeichen bezeichnet, jedoch erhöht um die Zahl 100.

Die zweite Ausführungsform wird nachfolgend nur insoweit erläutert werden, als sie sich von der ersten Ausführungsform unterscheidet, deren Beschreibung ansonsten auch zur Erläuterung der zweiten Ausführungsform heranzuziehen ist.

Der wesentliche Unterschied zwischen der ersten und der zweiten Ausführungsform liegt darin, dass in der zweiten Ausführungsform im Bereich zwischen den beiden parallelen Spulenanordnungen 112 und 114 nur ein Rohrbauteil 150 angeordnet ist, welches zwei parallele Reihen von Auslassöffnungen 152 aufweist, je eine zum Anblasen der Spulenanordnung 112 und zum Anblasen der Spulenanordnung 114. Die beiden Reihen von Auslassöffnungen 152 des Rohrbauteils 150 sind identisch ausgebildet, d. h. an derselben Längskoordinate längs der Leitungsbahn L weisen die in verschiedenen Umfangsabschnitten angeordneten Auslassöffnungen 152 identische Auslassöffnungsquerschnitte auf.

Wegen der konvektiven Kühlung der aufeinander zu weisenden Seiten der Spulenanordnungen 112 und 114 durch ein einziges Rohrbauteil 150 entfällt in der zweiten Ausführungsform die Fluidleitung 136. Da im Bereich zwischen den Spulenanordnungen 112 und 114 nur ein Rohrbauteil 150 anzuordnen ist, statt wie in der ersten Ausführungsform zwei parallele Rohrbauteile, können die beiden Spulenanordnungen 112 und 114 mit geringerem Abstand voneinander angeordnet werden als in der ersten Ausführungsform.

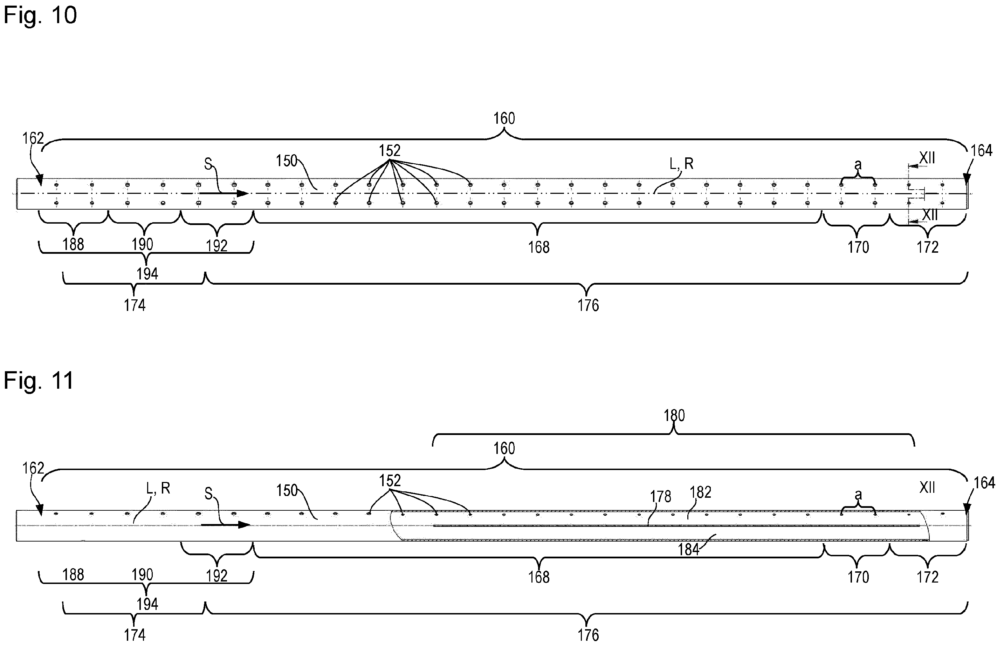

In Figur 10 ist das Rohrbauteil 150 in einer Perspektive in Draufsicht dargestellt, welche jener Perspektive von Figur 4 entspricht. Der Betrachter von Figur 10 blickt orthogonal auf die durch die Rohrwand verborgene, im Inneren des Rohrbauteils 150 angeordnete Trennwand 178. Die Blickrichtung ist orthogonal zu dem im Kühlabschnitt 160 gelegenen Bereich der Leitungsbahn L. Die beiden Reihen von Auslassöffnungen 152 liegen zu beiden Seiten der zur Zeichenebene von Figur 10 orthogonalen, die Leitungsbahn L enthaltenden Ebene CE gleich weit entfernt.

Anders als bei der ersten Ausführungsform weist die zweite Ausführungsform eine Öffnungszone 194 mit darin enthaltenen drei Öffnungsbereichen 188, 190 und 192 mit jeweils zwei Paaren von längs der Leitungsbahn L aufeinander folgenden Auslassöffnungen 152 auf. Dabei sind die Auslassöffnungsquerschnitte von Auslassöffnungen 152 innerhalb eines jeden Öffnungsbereichs, wie bei der ersten Ausführungsform, gleich groß. Die Auslassöffnungsquerschnitte der Auslassöffnungen nehmen jedoch in Strömungsrichtung S vom Öffnungsbereich 188 bis zum Öffnungsbereich 192 zu, und zwar vom Öffnungsbereich 188 zum Öffnungsbereich 190 um 20 %, bezogen auf den Auslassöffnungsquerschnitt der größeren Auslassöffnungen 152 des Öffnungsbereichs 190, und vom Öffnungsbereich 190 zum Öffnungsbereich 192 um etwa 15 bis 20 %, bezogen auf den Auslassöffnungsquerschnitt der größeren Auslassöffnungen 152 des Öffnungsbereichs 192.

Der Öffnungszone 194 in Strömungsrichtung S benachbart sind die Öffnungsbereiche 168, 170 und 172, deren Auslassöffnungen 152 jenen der Öffnungsbereiche 68, 70 und 72 entsprechen. Die Auslassöffnungen 152 des Öffnungsbereichs 168 entsprechen in ihrem Auslassöffnungsquerschnitt jenen des Öffnungsbereichs 190.

Die Abstandsbereiche 174 und 176 entsprechen den Abstandsbereichen 74 und 76 der ersten Ausführungsform.

Zur Trennwand 178 gilt das zu Trennwand 78 in der ersten Ausführungsform Gesagte.

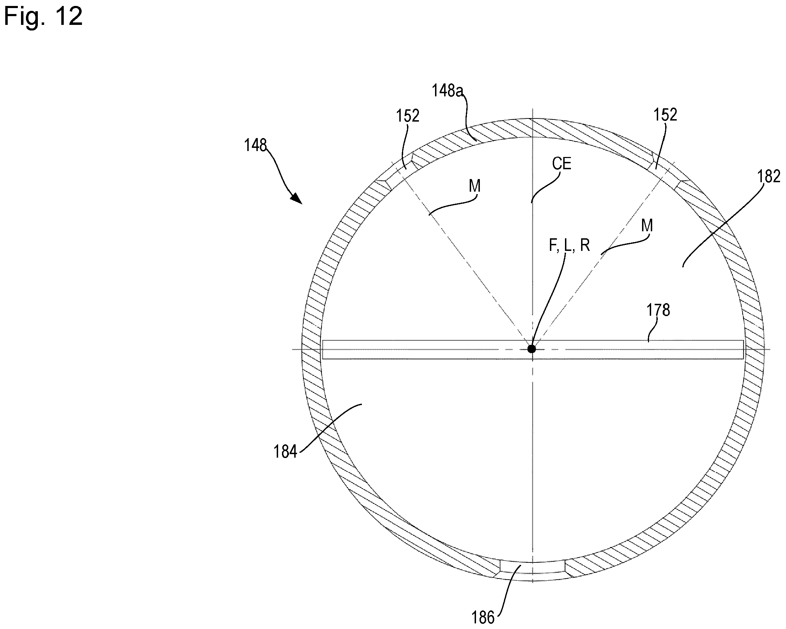

In Figur 12 ist der Querschnitt durch das Rohrbauteil 150 längs der gekröpften Schnittebene XII-XII von Figur 10 dargestellt. Da das Rohrbauteil 150 nur noch in einer Orientierung zwischen zwei Spulenanordnungen angeordnet werden muss, reicht eine Öffnung 186 als Anordnungs- oder Orientierungshilfe längs des Umfangs des Rohrbauteils 150 aus.

Die Auslassöffnungen 152 der beiden Reihen von Auslassöffnungen 152 am Rohrbauteil 150 sind in Umfangsrichtung um die Leitungsbahn L symmetrisch zu der die Leitungsbahn L enthaltenden und zur Trennwand 178 orthogonalen Symmetrieebene CE angeordnet, und zwar derart, dass ihre Mittellinien M in einem Winkelbereich von etwa 75° gelegen sind. Diese Bedingung gilt auch für die einzelne Reihe an Auslassöffnungen 52 der ersten Ausführungsform, die ebenfalls symmetrisch bezüglich der Symmetrieebene CE angeordnet sind, da die Mittellinien der Auslassöffnungen 52 in der Symmetrieebene CE enthalten sind.

## Patentansprüche

1. Konvektiv zwangskühlbare Linearmotor-Statoranordnung (10; 110), umfassend eine Spulenanordnung (12, 14; 112, 114) mit einer Mehrzahl von längs einer Folgeachse (F) aufeinander folgend angeordneten bestrombaren elektrischen Spulen (15) zur Erzeugung eines sich zeitlich und räumlich ändernden Magnetfeldes in der Umgebung U der Spulenanordnung (12, 14; 112, 114), und weiter umfassend eine Konvektionskühlvorrichtung (22, 30; 122, 130), welche eine sich längs einer Leitungsbahn (L) erstreckende Fluidleitung (32, 34, 36, 38; 132, 134, 138) aufweist, von der wenigstens ein Abschnitt neben der Spulenanordnung (12, 14; 112, 114) mit Abstand von dieser verläuft, wobei ein neben der Spulenanordnung (12, 14; 112, 114) verlaufender Abschnitt der Fluidleitung (32, 34, 36, 38; 132, 134, 138) als Kühlabschnitt (60; 160) in einer Fluidleitungswand eine Vielzahl von Auslassöffnungen (52; 152) aufweist, welche zu der Spulenanordnung (12, 14; 112, 114) hinweisen und mit Abstand (a) voneinander längs der Leitungsbahn (L) hintereinander angeordnet sind, wobei die Statoranordnung (10; 110) weiter eine Fördervorrichtung (22; 122) umfasst, welche mit der Fluidleitung (32, 34, 36, 38; 132, 134, 138) verbunden und zur Förderung eines Fluids in der Fluidleitung (32, 34, 36, 38; 132, 134, 138) sowie durch die Auslassöffnungen (52; 152) hindurch zur Spulenanordnung (12, 14; 112, 114) hin ausgebildet ist,
**dadurch gekennzeichnet, dass** im Kühlabschnitt (60; 160) längs der Leitungsbahn (L) Auslassöffnungen (52; 152) mit betragsmäßig unterschiedlichen vom Fluid durchströmbaren Auslassöffnungsquerschnitten vorgesehen sind oder/und die Abstände (a) zwischen zwei längs der Leitungsbahn (L) unmittelbar hintereinander angeordneten Auslassöffnungen (52; 152) in unterschiedlichen Bereichen (74, 76; 174, 176) des Kühlabschnitts (60; 160) längs der Leitungsbahn (L) betragsmäßig unterschiedlich sind.

2. Linearmotor-Statoranordnung (10; 110) nach Anspruch 1,
**dadurch gekennzeichnet, dass** der Kühlabschnitt (60) während eines Betriebs der Fördervorrichtung (22; 122) längs der Leitungsbahn (L) in einer Strömungsrichtung (S) von Fluid durchströmt ist, wobei in einem weiter stromabwärts gelegenen Öffnungsbereich (68, 70, 72; 168, 170, 172) des Kühlabschnitts (60; 160) wenigstens eine Auslassöffnung (52; 152) mit einem kleineren Auslassöffnungsquerschnitt vorgesehen ist als in einem weiter stromaufwärts gelegenen Öffnungsbereich (66, 68, 70; 192, 168, 170), wobei bevorzugt der Kühlabschnitt (60; 160) wenigstens zwei in Strömungsrichtung (S) aufeinander folgende Öffnungsbereiche aufweist, von welchen ein erster Öffnungsbereich (66, 68, 70; 192, 168, 170) wenigstens eine Auslassöffnung (52; 152) mit einem größeren Auslassöffnungsquerschnitt aufweist als ein in Strömungsrichtung (S) unmittelbar auf den ersten Öffnungsbereich (66, 68, 70; 192, 168, 170) folgender zweiter Öffnungsbereich (68, 70, 72; 168, 170, 172).

3. Linearmotor-Statoranordnung (110) nach Anspruch 2,
**dadurch gekennzeichnet, dass** eine weiter stromaufwärts gelegene Öffnungszone (194) des Kühlabschnitts (160) wenigstens zwei in Strömungsrichtung (S) aufeinander folgende Öffnungsbereiche (188, 190, 192) aufweist von welchen ein erster Öffnungsbereich (188, 190) wenigstens eine Auslassöffnung (152) mit einem kleineren Auslassöffnungsquerschnitt aufweist als ein in Strömungsrichtung (S) unmittelbar auf den ersten Öffnungsbereich (188, 190) folgender zweiter Öffnungsbereich (190, 192).

4. Linearmotor-Statoranordnung (10; 110) nach einem der Ansprüche 2 oder 3, **dadurch gekennzeichnet, dass** wenigstens zwei der in Strömungsrichtung (S) hintereinander gelegenen Öffnungsbereiche (66, 68, 70, 72; 192, 168, 170; 172) eine unterschiedliche Anzahl an Auslassöffnungen (52; 152) oder/und eine unterschiedliche Länge längs der Leitungsbahn (L) aufweisen.

5. Linearmotor-Statoranordnung (10; 110) nach einem der Ansprüche 2 bis 4, **dadurch gekennzeichnet, dass** für wenigstens einen Öffnungsbereich (66, 68, 70, 72; 192, 168, 170; 172), vorzugsweise für jeden Öffnungsbereich (66, 68, 70, 72; 192, 168, 170; 172), gilt, dass die Auslassöffnungsquerschnitte aller Auslassöffnungen (52; 152) des Öffnungsbereichs (66, 68, 70, 72; 192, 168, 170; 172) betragsmäßig gleich groß sind.

6. Linearmotor-Statoranordnung (10; 110) nach einem der Ansprüche 1 bis 5, **dadurch gekennzeichnet, dass** der Kühlabschnitt (60; 160) während eines Betriebs der Fördervorrichtung (22; 122) längs der Leitungsbahn (L) in einer Strömungsrichtung (S) von Fluid durchströmt ist, wobei in einem weiter stromabwärts gelegenen Abstandsbereich (76; 176) des Kühlabschnitts (60; 160) Auslassöffnungen (52; 152) längs der Leitungsbahn (L) mit kleinerem Abstand (a) voneinander angeordnet sind als in einem weiter stromaufwärts gelegenen Abstandsbereich (74; 174), wobei bevorzugt der Kühlabschnitt (60; 160) wenigstens zwei in Strömungsrichtung (S) aufeinander folgende Abstandsbereiche (74, 76; 174, 176) aufweist, von welchen in einem ersten Abstandsbereich (74; 174) Auslassöffnungen (52; 152) mit größerem Abstand (a) aufeinander folgend angeordnet sind als in einem in Strömungsrichtung (S) unmittelbar auf den ersten Abstandsbereich (74; 174) folgenden zweiten Abstandsbereich (76; 176).

7. Linearmotor-Statoranordnung (10; 110) nach Anspruch 6,
**dadurch gekennzeichnet, dass** wenigstens zwei in Strömungsrichtung (S) hintereinander gelegene Abstandsbereiche (74, 76; 174, 176) eine unterschiedliche Anzahl an Auslassöffnungen (52; 152) oder/und eine unterschiedliche Länge längs der Leitungsbahn (L) aufweisen.

8. Linearmotor-Statoranordnung (10; 110) nach einem der Ansprüche 6 oder 7, **dadurch gekennzeichnet, dass** für wenigstens einen Abstandsbereich (74, 76; 174, 176), vorzugsweise für jeden Abstandsbereich (74, 76; 174, 176), gilt, dass die Abstände (a) zwischen zwei in Strömungsrichtung (S) unmittelbar aufeinander folgenden Auslassöffnungen (52; 152) für alle Auslassöffnungen (52; 152) des Abstandsbereichs (52; 152) betragsmäßig gleich groß sind.

9. Linearmotor-Statoranordnung (10; 110) nach einem der vorhergehenden Ansprüche,
**dadurch gekennzeichnet, dass** längs eines Trennbereichs (80; 180) im Kühlabschnitt (60; 160) eine Trennwand (78; 178) im Inneren der Fluidleitung (32, 34, 36, 38; 132, 134, 138) angeordnet ist, welche längs ihrer Erstreckung ein Innenvolumen der Fluidleitung (32, 34, 36, 38; 132, 134, 138) körperlich in zwei voneinander getrennte Teilvolumina (82, 84; 182, 184) unterteilt, wobei bevorzugt die beiderseits der Trennwand (78; 178) gelegenen Teilvolumina (82, 84; 182, 184) sich, bezogen auf ein größeres der Teilvolumina (82, 84; 182, 184), in ihrer Größe um nicht mehr als 10 % unterscheiden, wobei besonders bevorzugt die beiderseits der Trennwand (78; 178) gelegenen Teilvolumina (82, 84; 182, 184) gleich groß sind.

10. Linearmotor-Statoranordnung (10; 110) nach Anspruch 9,
**dadurch gekennzeichnet, dass** die Trennwand (78; 178) eine ebene Trennwand (78; 178) ist.

11. Linearmotor-Statoranordnung (10; 110) nach einem der Ansprüche 9 oder 10, **dadurch gekennzeichnet, dass** sich die Trennwand (78; 178) über mehr als einen Öffnungsbereich (68, 70, 72; 168, 170, 172) erstreckt.

12. Linearmotor-Statoranordnung (10; 110) nach einem der Ansprüche 9 bis 11, **dadurch gekennzeichnet, dass** sich die Trennwand (78; 178) vollständig innerhalb eines Abstandsbereichs (76; 176) erstreckt.

13. Linearmotor-Statoranordnung (10; 110) nach einem der Ansprüche 9 bis 12, **dadurch gekennzeichnet, dass** sich die Trennwand (78; 178) über mehr als 40 % der Länge des Kühlabschnitts (60; 160) erstreckt.

14. Linearmotor-Statoranordnung (10; 110) nach einem der Ansprüche 9 bis 13, **dadurch gekennzeichnet, dass** das Fluid an einem Längsende (62; 162) des Kühlabschnitts (60; 160) in diesen eingeleitet wird und die Trennwand (78; 178) mit wenigstens 70 % ihrer Längserstreckung in dem weiter stromabwärts der Längsmitte des Kühlabschnitts (60; 160) gelegenen Bereich angeordnet ist.

15. Linearmotor-Statoranordnung (10; 110) nach einem der Ansprüche 9 bis 14, **dadurch gekennzeichnet, dass** die Trennwand (78; 178) mit Abstand von beiden Längsenden (62, 64; 162, 164) des Kühlabschnitts (60; 160) angeordnet ist, oder/und dass alle im Trennbereich (80; 180) angeordneten Auslassöffnungen (52; 152) auf derselben Seite der Trennwand angeordnet sind, oder/und dass eine Mehrzahl von Auslassöffnungen (52; 152), vorzugsweise alle Auslassöffnungen (52; 152), derart angeordnet sind, dass ihre eine Leitungswand durchsetzenden virtuellen Mittellinien (M) in einem Winkelbereich von nicht mehr als 90° um die Leitungsbahn (L) gelegen sind.

## Claims

1. Linear motor stator arrangement (10; 110) capable of convective forced cooling, comprising a coil arrangement (12, 14; 112, 114) with a plurality of conductive electrical coils (15) arranged one after another along a sequence axis (F) for generating a temporally and spatially varying magnetic field in the neighborhood U of the coil arrangement (12, 14; 112, 114), and further comprising a convective cooling device (22, 30; 122, 130) exhibiting a fluid line (32, 34, 36, 38; 132, 134, 138) extending along a pathway (L), of which at least one section runs alongside the coil arrangement (12, 14; 112, 114) at a spacing from it, where a section of the fluid line (32, 34, 36, 38; 132, 134, 138) running alongside the coil arrangement (12, 14; 112, 114) as a cooling section (60; 160) exhibits in a fluid line wall a large number of outlet ports (52; 152) which face towards the coil arrangement (12, 14; 112, 114) and are arranged one after another at a spacing (a) from one another along the pathway (L), where the stator arrangement (10; 110) further comprises a conveyor device (22; 122) which is configured so as to be connected with the fluid line (32, 34, 36, 38; 132, 134, 138) and for conveying a fluid in the fluid line (32, 34, 36, 38; 132, 134, 138) and through the outlet ports (52; 152) to the coil arrangement (12, 14; 112, 114),
**Characterized in that** in the cooling section (60; 160) there are provided along the pathway (L) outlet ports (52; 152) with quantitatively different outlet port cross-sections through which fluid can flow and/or the spacings (a) between two outlet ports (52; 152) arranged immediately one after another along the pathway (L) are quantitatively different along the pathway (L) in different regions (74, 76; 174, 176) of the cooling section (60; 160).

2. Linear motor stator arrangement (10; 110) according to Claim 1,
**Characterized in that** during operation of the conveyor device (22; 122) fluid flows through the cooling section (60) along the pathway (L) in a direction of flow (S), where in a port region (68, 70, 72; 168, 170, 172) of the cooling section (60; 160) located further downstream there is provided at least one outlet port (52; 152) with a smaller outlet port cross-section than in a port region (66, 68, 70; 192, 168, 170) located further upstream, where preferably the cooling section (60; 160) exhibits at least two port regions following one another in the direction of flow (S), of which a first port region (66, 68, 70; 192, 168, 170) exhibits at least one outlet port (52; 152) with a larger outlet port cross-section than a second port region (68, 70, 72; 168, 170, 172) immediately following the first port region (66, 68, 70; 192, 168, 170) in the direction of flow (S).

3. Linear motor stator arrangement (110) according to Claim 2,
**Characterized in that** a port zone (194) of the cooling section (160) located further upstream exhibits at least two port regions (188, 190, 192) following one another in the direction of flow (S) of which a first port region (188, 190) exhibits at least one outlet port (152) with a smaller outlet port cross-section than a second port region (190, 192) immediately following the first port region (188, 190) in the direction of flow (S).

4. Linear motor stator arrangement (10; 110) according to one of the Claims 2 or 3,
**Characterized in that** at least two of the port regions (66, 68, 70, 72; 192, 168, 170; 172) located one after another in the direction of flow (S) exhibit a different number of outlet ports (52; 152) and/or a different length along the pathway (L).

5. Linear motor stator arrangement (10; 110) according to one of the Claims 2 to 4,
**Characterized in that** for at least one port region (66, 68, 70, 72; 192, 168, 170; 172), preferably for every port region (66, 68, 70, 72; 192, 168, 170; 172), the outlet port cross-sections of all outlet ports (52; 152) of the port regions (66, 68, 70, 72; 192, 168, 170; 172) are quantitatively equal in size.

6. Linear motor stator arrangement (10; 110) according to one of the Claims 1 to 5,
**Characterized in that** during operation of the conveyor device (22; 122) fluid flows through the cooling section (60; 160) along the pathway (L) in a direction of flow (S), where in a spacing region (76; 176) of the cooling section (60; 160) located further downstream outlet ports (52; 152) are arranged along the pathway (L) at a smaller spacing (a) from one another than in a spacing region (74; 174) located further upstream, where preferably the cooling section (60; 160) exhibits at least two spacing regions (74, 76; 174, 176) following one another in the direction of flow (S), of which in a first spacing region (74; 174) outlet ports (52; 152) are arranged following one another at a greater spacing (a) than in a second spacing region (76; 176) immediately following the first spacing region (74; 174) in the direction of flow (S).

7. Linear motor stator arrangement (10; 110) according to one of the Claims 6, **Characterized in that** at least two spacing regions (74, 76; 174, 176) lying one after another in the direction of flow (S) exhibit a different number of outlet ports (52; 152) and/or a different length along the pathway (L).

8. Linear motor stator arrangement (10; 110) according to one of the Claims 6 or 7,
**Characterized in that** for at least one spacing region (74, 76; 174, 176), preferably for every spacing region (74, 76; 174, 176), it is the case that the spacings (a) between two outlet ports (52; 152) immediately following one another in the direction of flow (S) are quantitatively equal in size for all outlet ports (52; 152) of the spacing region (52; 152).

9. Linear motor stator arrangement (10; 110) according to one of the preceding claims,
**Characterized in that** along a separation region (80; 180) in the cooling section (60; 160) a partition (78; 178) is arranged in the interior of the fluid line (32, 34, 36, 38; 132, 134, 138), which along its extension physically subdivides an interior volume of the fluid line (32, 34, 36, 38; 132, 134, 138) into two part-volumes (82, 84; 182, 184) separated from one another, where preferably the part-volumes (82, 84; 182, 184) located on both sides of the partition (78; 178) differ in their size by not more than 10% based on a larger of the part-volumes (82, 84; 182, 184), where especially preferably the part-volumes (82, 84; 182, 184) located on both sides of the partition (78; 178) are equal in size.

10. Linear motor stator arrangement (10; 110) according to Claim 9,
**Characterized in that** the partition (78; 178) is a plane partition (78; 178).

11. Linear motor stator arrangement (10; 110) according to one of the Claims 9 or 10,
**Characterized in that** the partition (78; 178) extends over more than one port region (68, 70, 72; 168, 170, 172).

12. Linear motor stator arrangement (10; 110) according to one of the Claims 9 to 11,
**Characterized in that** the partition (78; 178) extends completely within one spacing region (76; 176).

13. Linear motor stator arrangement (10; 110) according to one of the Claims 9 to 12,
**Characterized in that** the partition (78; 178) extends over more than 40% of the length of the cooling section (60; 160).

14. Linear motor stator arrangement (10; 110) according to one of the Claims 9 to 13,
**Characterized in that** the fluid is introduced into the cooling section (60; 160) at a longitudinal end (62; 162) of it and the partition (78; 178) is arranged with at least 70% of its longitudinal extension in the region located further downstream than the longitudinal middle of the cooling section (60; 160).

15. Linear motor stator arrangement (10; 110) according to one of the Claims 9 to 14,
**Characterized in that** the partition (78; 178) is arranged at a spacing from both longitudinal ends (62, 64; 162, 164) of the cooling section (60; 160) or/and **in that** all the outlet ports (52; 152) arranged in the separation region (80; 180) are arranged on the same side of the partition or/and **in that** a plurality of outlet ports (52; 152), preferably all outlet ports (52; 152), are arranged in such a way that their virtual midlines (M) passing through a line wall are located within an angular region of not more than 90° around the pathway (L).

## Revendications

1. Dispositif d'agencement de stator de moteur linéaire à refroidissement forcé par convection (10 ; 110), comprenant un agencement de bobines (12, 14 ; 112, 114) avec une pluralité de bobines électriques (15) pouvant être alimentées en courant, disposées les unes à la suite des autres le long d'un axe de séquence (F) pour générer un champ magnétique variant dans le temps et dans l'espace dans l'environnement U de l'agencement de bobines (12, 14 ; 112, 114), et comprenant en outre un dispositif de refroidissement par convection (22, 30 ; 122, 130) qui présente une conduite de fluide (32, 34, 36, 38 ; 132, 134, 138) s'étendant le long d'une trajet de conduite (L), dont au moins une partie s'étend à côté de l'agencement de bobines (12, 14 ; 112, 114) à distance de celui-ci, une partie de la conduite de fluide (32, 34, 36, 38 ; 112, 114) de la conduite de fluide (32, 34, 36, 38 ; 132, 134, 138) s'étendant à côté de l'agencement de bobines (12, 14 ; 112, 114) comporte, en tant que partie de refroidissement (60 ; 160) dans une paroi de conduite de fluide, une pluralité d'ouvertures de sortie (52 ; 152) qui sont orientées vers l'agencement de bobines (12, 14 ; 112, 114) et sont disposées les unes derrière les autres à une distance (a) les unes des autres le long du trajet de conduite (L), l'agencement de stator de moteur (10 ; 110) comprenant en outre un dispositif de convoyage (22 ; 122) qui est relié à la conduite de fluide (32, 34, 36, 38 ; 132, 134, 138) connectés et servant à transporter un fluide dans la conduite de fluide (32, 34, 36, 38 ; 132, 134, 138) et à travers les ouvertures de sortie (52 ; 152) vers l'agencement de bobines (12, 14 ; 112, 114),
**caractérisé en ce que**, dans la partie de refroidissement (60 ; 160), des ouvertures de sortie (52 ; 152) avec des sections transversales de sortie différentes pouvant être traversées par le fluide sont prévues le long du trajet de conduite (L) et/ou les distances (a) entre deux ouvertures de sortie (52 ; 152) disposées directement l'une derrière l'autre le long du trajet de conduite (L) sont différentes dans différentes zones (74, 76 ; 174, 176) de la partie de refroidissement (60 ; 160) le long du trajet de conduite (L).

2. Agencement de stator de moteur linéaire (10 ; 110) selon la revendication 1, **caractérisé en ce que** la partie de refroidissement (60) est traversée par le fluide pendant le fonctionnement du dispositif de convoyage (22 ; 122) est traversée par un fluide dans un sens d'écoulement (S) le long du trajet de conduite (L), au moins une ouverture de sortie (52 ; 152) avec une ouverture de sortie plus petite étant prévue dans une zone d'ouverture (68, 70, 72 ; 168, 170, 172) de la partie de refroidissement (60 ; 160) est prévue au moins une ouverture de sortie (52 ; 152) avec une section transversale d'ouverture de sortie plus petite que dans une zone d'ouverture située plus en amont (66, 68, 70 ; 192, 168, 170) située plus en amont, la partie de refroidissement (60 ; 160) comportant de préférence au moins deux zones d'ouverture successives dans le sens d'écoulement (S), dont une première zone d'ouverture (66, 68, 70 ; 192, 168, 170) comporte au moins une ouverture de sortie (52 ; 152) avec une section transversale d'ouverture de sortie plus grande qu'une deuxième zone d'ouverture (68, 70, 72 ; 168, 170, 172) située immédiatement en aval de la première zone d'ouverture (66, 68, 70 ; 192, 168, 170) dans le sens d'écoulement (S).

3. Agencement de stator de moteur linéaire (110) selon la revendication 2, **caractérisé en ce qu'**une zone d'ouverture (194) située plus en amont de la partie de refroidissement (160) comporte au moins deux zones d'ouverture (188, 190, 192) qui se succèdent dans le sens d'écoulement (S), parmi lesquelles une première zone d'ouverture (188, 190) présente au moins une ouverture de sortie (152) avec une section transversale d'ouverture de sortie plus petite qu'une deuxième zone d'ouverture (190, 192) qui suit immédiatement la première zone d'ouverture (188, 190) dans le sens d'écoulement (S).

4. Agencement de stator de moteur linéaire (10 ; 110) selon l'une des revendications 2 ou 3,
**caractérisé en ce qu'**au moins deux des zones d'ouverture (66, 68, 70, 72 ; 192, 168, 170 ; 172) situées les unes derrière les autres dans le sens d'écoulement (S) présentent un nombre différent d'ouvertures de sortie (52 ; 152) et/ou une longueur différente le long du trajet de conduite (L).

5. Agencement de stator de moteur linéaire (10 ; 110) selon l'une des revendications 2 à 4,
**caractérisé en ce que**, pour au moins une zone d'ouverture (66, 68, 70, 72 ; 192, 168, 170 ; 172), de préférence pour chaque zone d'ouverture (66, 68, 70, 72 ; 192, 168, 170 ; 172), les sections transversales de sortie de toutes les ouvertures de sortie (52 ; 152) de la zone d'ouverture (66, 68, 70, 72 ; 192, 168, 170 ; 172) sont de même taille.

6. Agencement de stator de moteur linéaire (10 ; 110) selon l'une des revendications 1 à 5,
**caractérisé en ce que** la partie de refroidissement (60 ; 160) est traversée par un fluide dans le sens d'écoulement (S) le long du trajet de conduite (L) pendant le fonctionnement du dispositif de convoyage (22 ; 122), les ouvertures de sortie se situent dans une zone de distance (52 ; 152) sont disposées le long du trajet de conduite (L) à une distance (a) plus petite les unes des autres que dans une zone de distance (74 ; 174) située plus en amont, la partie de refroidissement (60 ; 160) comportant de préférence au moins deux zones de distance (74, 76 ; 174, 176) qui se succèdent dans le sens d'écoulement (S) et dont les ouvertures de sortie (52 ; 152) sont agencées dans une première zone de distance (74 ; 174) avec un distance (a) plus grande entre elles que dans une deuxième zone de distance (74 ; 174) qui suit immédiatement la première zone de distance (74 ; 174) dans le sens d'écoulement (S) (76 ; 176) qui suit immédiatement la première zone d'espacement (74 ; 174) dans le sens d'écoulement (S).

7. Agencement de stator de moteur linéaire (10 ; 110) selon la revendication 6, **caractérisé en ce qu'**au moins deux zones de distance (74, 76 ; 174, 176) situées l'une derrière l'autre dans le sens d'écoulement (S) présentent un nombre différent d'ouvertures de sortie (52 ; 152) et/ou une longueur différente le long du trajet de conduite (L).

8. Agencement de stator de moteur linéaire (10 ; 110) selon l'une des revendications 6 ou 7,
**caractérisé en ce que**, pour au moins une zone de distance (74, 76 ; 174, 176), de préférence pour chaque zone de distance (74, 76 ; 174, 176), les distances (a) entre deux ouvertures de sortie (52 ; 152) se succédant immédiatement dans le sens d'écoulement (S) sont de même valeur pour toutes les ouvertures de sortie (52 ; 152) de la zone de distance (52 ; 152).

9. Agencement de stator de moteur linéaire (10 ; 110) selon l'une des revendications précédentes,
**caractérisé en ce que**, le long d'une zone de séparation (80 ; 180) dans la partie de refroidissement (60 ; 160), à l'intérieur de la conduite de fluide (32, 34, 36, 38 ; 132, 134, 138), une paroi de séparation (78 ; 178) qui, le long de son extension, divise physiquement un volume intérieur de la conduite de fluide (32, 34, 36, 38 ; 132, 134, 138) en deux volumes partiels (82, 84 ; 182, 184) séparés , de préférence les volumes partiels (82, 84 ; 182, 184) situés aux deux côtés de la paroi de séparation (78; 178) , rapportés à un plus grand des volumes partiels (82, 84 ; 182, 184), ne diffèrent pas de plus de 10 % en termes de taille, les volumes partiels (82, 84 ; 182, 184) situés de part et d'autre de la paroi de séparation (78 ; 178) soient de taille identique.

10. Agencement de stator de moteur linéaire (10 ; 110) selon la revendication 9, **caractérisé en ce que** la paroi de séparation (78 ; 178) est une paroi de séparation plane (78 ; 178).

11. Agencement de stator de moteur linéaire (10 ; 110) selon l'une des revendications 9 ou 10,
**caractérisé en ce que** la paroi de séparation (78 ; 178) s'étend sur plus d'une zone d'ouverture (68, 70, 72 ; 168, 170, 172).

12. Agencement de stator de moteur linéaire (10 ; 110) selon l'une des revendications 9 à 11,
**caractérisé en ce que** la paroi de séparation (78 ; 178) s'étend entièrement à l'intérieur d'une zone de distance (76 ; 176).

13. Agencement de stator de moteur linéaire (10 ; 110) selon l'une des revendications 9 à 12,
**caractérisé en ce que** la paroi de séparation (78 ; 178) s'étend sur plus de 40 % de la longueur de la partie de refroidissement (60 ; 160).

14. Agencement de stator de moteur linéaire (10 ; 110) selon l'une des revendications 9 à 13,
**caractérisé en ce que** le fluide est introduit à une extrémité longitudinale (62 ; 162) de la partie de refroidissement (60 ; 160) et que la paroi de séparation (78 ; 178) est agencée avec au moins 70 % de son extension longitudinale dans la zone située plus en aval du centre longitudinal de la partie de refroidissement (60 ; 160).

15. Agencement de stator de moteur linéaire (10 ; 110) selon l'une des revendications 9 à 14,
**caractérisé en ce que** la paroi de séparation (78 ; 178) est disposée à distance des deux extrémités longitudinales (62, 64 ; 162, 164) de la partie de refroidissement (60 ; 160), et/ou **en ce que** toutes les ouvertures de sortie (52 ; 152) agencées dans la zone de séparation (80 ; 180) sont agencées du même côté de la paroi de séparation, et/ou **en ce qu'**une pluralité d'ouvertures de sortie (52 ; 152), de préférence toutes les ouvertures de sortie (52 ; 152), sont agencées de telle sorte que leurs axes virtuels (M) traversant une paroi de la conduite sont situés dans une plage angulaire ne dépassant pas 90° autour du trajet de conduite (L).
